# EUROPEAN PATENT SPECIFICATION

(11) **EP 2 101 179 B1**
(45) Date of publication and mention of the grant of the patent: **06.05.2020**
(21) Application number: 07832463.9
(22) Date of filing: 26.11.2007
(51) Int. Cl.: G01N 35/00, G01N 21/27

(54) **ANALYZER**
ANALYSEVORRICHTUNG
ANALYSEUR

(30) Priority: 09.01.2007 JP 2007001728
(43) Date of publication of application: 16.09.2009
(73) Proprietor: Beckman Coulter, Inc., Brea, CA 92821 (US)
(72) Inventor: NOZAWA, Osamu, Tokyo 151-0072 (JP)
(74) Representative: von Hellfeld, Axel
(86) International application number: PCT/JP2007/072738
(87) International publication number: WO 2008/084601

(56) References cited:
- JP-A- 05 281 242
- JP-A- 2003 315 343
- US-A- 4 678 755
- US-A- 5 424 212
- US-A- 6 080 364
- US-A1- 2004 093 167

## Description

### TECHNICAL FIELD

The present invention relates to an analyzer that performs a calibration analysis process, in which a calibrator is analyzed for each analytical item, and a blank analysis process, in which a blank sample is used, in order to maintain its analysis accuracy.

### BACKGROUND ART

Analyzers have been used which automatically analyze a specimen such as blood or a bodily fluid. Conventional well-known analyzers dispense a reagent corresponding to an analytical item into a reaction vessel from plural reagent vessels that are stored in a reagent container, add a specimen into the reaction vessel into which the reagent has been dispensed, and detect a reaction between the reagent and the specimen in the reaction vessel. Such analyzers perform a calibration analysis process and a blank analysis process simultaneously in order to maintain their analysis accuracy. In the calibration analysis process, a standard for photometric processes, i.e., a calibration curve, is set based on the analysis result obtained by analyzing the calibrator, i.e., based on the known result. In the blank analysis process, the calibration curve, which has been set during the calibration analysis process, is corrected based on the analysis result obtained by analyzing blank samples such as ion-exchange water and normal saline. After the calibration analysis process and the blank analysis process, the accuracy of the calibration curve can be maintained for a predetermined period of time, which is called the calibration validity period. Conventionally, when the calibration validity period is expired, both of the calibration analysis process and the blank analysis process are automatically accepted to prepare for the calibration analysis process and the blank analysis process (e.g., see Patent Document 1).

Patent Document 1: Japanese Patent Application Laid-open No. H8-262028

US 6080364 A discloses an automatic analyzer having plurality of analytical units to which analysis items are allocated. When necessity of execution of calibration or accuracy management occurs, a display block relating to an occurrence cause on a state inspection screen flickers. When a receiving button corresponding to the flickering display block is instructed, the related analysis item name and analytical unit name are displayed in the display area and calibration or accuracy management is executed.

US 2004/093167 A1 discloses an analyte concentration monitoring system having network-based communication features which provide a link between an analyte detection system and a centralized computer. The analyte detection system has a processor that calculates analyte concentration in accordance with software executable by the processor. Under certain conditions, the software needs to be updated. Accordingly, when the analyte detection system is connected to the centralized computer, the centralized computer determines whether a software update is needed. If a software update is needed, then the centralized computer conveniently provides the software update to the analyte detection system without intervention from a user.

### DISCLOSURE OF INVENTION

### PROBLEM TO BE SOLVED BY THE INVENTION

Conventional analyzers perform the calibration analysis process and the blank analysis process always together, which causes a cost problem because the calibration analysis process can be expensive when the calibrator is expensive. To avoid spending the high cost, users of the analyzers have demanded that the calibration analysis process and the blank analysis process be performed separately when there is no need to set the calibration curve, so that the blank analysis process alone, which corrects the calibration curve, can be performed.

The present invention is made in view of the above-mentioned problem. An object of the present invention is to provide an analyzer that maintains its analysis accuracy and reduces the cost for the calibration analysis process.

### MEANS FOR SOLVING PROBLEM

An analyzer according to the present invention includes the features of claim 1. In the dependent claims, further aspects of the present invention are defined.

### EFFECT OF THE INVENTION

According to the present invention, the initiation timings of the calibration analysis process and the blank analysis process are independently managed. The blank analysis process is performed before the expiration date for managing accuracy of the blank analysis process result is expired and further when the reagent is supplied. The calibration analysis process is performed before the expiration date for managing accuracy of the calibration analysis process result is expired and further when the reagent is supplied. Thus, the calibration analysis process is performed only when it is needed, whereby its analysis accuracy can be maintained and the cost of the calibration analysis process can be reduced.

### BRIEF DESCRIPTION OF DRAWINGS

FIG. 1 is a schematic diagram of a main configuration of an analyzer 1 in accordance with an embodiment.
FIG. 2 is an illustration of how a calibration analysis process and a blank analysis process are managed in the analyzer shown in FIG. 1.
FIG. 3 is an illustration of the timings of performing a conventional calibration analysis process and a conventional blank analysis process.
FIG. 4 is an illustration of the timings of performing the calibration analysis process and the blank analysis process in the analyzer shown in FIG. 1.
FIG. 5 is an illustration of the timings of performing the calibration analysis process and the blank analysis process in the analyzer shown in FIG. 1.
FIG. 6 is a diagram of an exemplary display screen of a display unit shown in FIG. 1.
FIG. 7 is a flowchart of a procedure in which the expiration date of the calibration analysis process and the expiration date of the blank analysis process are output to be displayed in the analyzer shown in FIG. 1.
FIG. 8 is an illustration of exemplary information stored in a storage unit shown in FIG. 1.
FIG. 9 is an illustration of exemplary information stored in the storage unit shown in FIG. 1.
FIG. 10 is a diagram of an exemplary display screen of the display unit shown in FIG. 1.
FIG. 11 is a diagram of an exemplary display screen of the display unit shown in FIG. 1.
FIG. 12 is a flowchart of a procedure for managing the calibration analysis process and the blank analysis process in the analyzer shown in FIG. 1.
FIG. 13 is a flowchart of a procedure of a calibration data search process shown in FIG. 12.
FIG. 14 is a flowchart of a procedure of a blank data search process shown in FIG. 12.
FIG. 15 is a flowchart of a procedure of a calibration data check process shown in FIG. 12.
FIG. 16 is a flowchart of a procedure of a blank data check process shown in FIG. 12.
FIG. 17 is a diagram of an exemplary display screen of the display shown in FIG. 1.
FIG. 18 is a flowchart of another procedure in which the calibration analysis process and the blank analysis process are managed in the analyzer shown in FIG. 1.

### EXPLANATIONS OF LETTERS OR NUMERALS

- 1: Analyzer
- 2: Measurement system
- 3: Control system
- 10: Reaction table
- 11: First-reagent container
- 11a: First-reagent vessel
- 11b: First-reagent reader
- 12: First-reagent dispensing system
- 13: Specimen transfer unit
- 13a: Specimen vessel
- 13b: Specimen rack
- 14: Specimen dispensing system
- 14a, 16a: Arm
- 15: Second-reagent container
- 15a: Second-reagent vessel
- 15b: Second-reagent reader
- 16: Second-reagent dispensing system
- 17: Stirring unit
- 18: Photometry unit
- 19: Washing unit
- 21: Reaction vessel
- 31: Control unit
- 32: Management unit
- 33: Input unit
- 34: Analysis unit
- 35: Storage unit
- 36: Output unit
- 37: Display unit
- 38: Transceiving unit

### BEST MODE(S) FOR CARRYING OUT THE INVENTION

As an analyzer in accordance with an embodiment of the present invention, an analyzer for measuring optical characteristics of a specimen will be described with reference to the accompanying drawings. The embodiment does not limit the scope of the present invention. In the descriptions of the drawings, the same components have the same numerals.

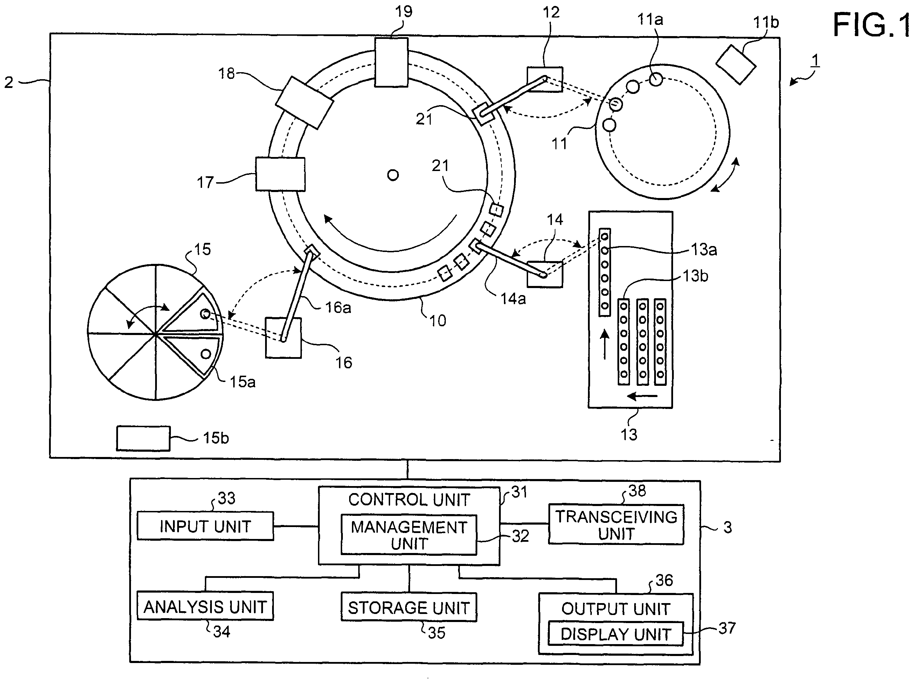

FIG. 1 is a schematic diagram of a configuration of an analyzer in accordance with the embodiment. As shown in FIG. 1, an analyzer 1 includes a measurement system 2 and a control system 3. The measurement system 2 dispenses a reagent and a specimen to be analyzed into a reaction vessel 21 and then optically measures a reaction caused in the reaction vessel 21. The control system 3 controls the entire analyzer 1 including the measurement system 2 and analyzes a result of the measurement that is performed by the measurement system 2. The two systems cooperate so that the analyzer 1 can automatically perform a biochemical, immunological, or genetic analysis on plural specimens.

First, a measurement system will be described. The measurement system 2 includes a reaction table 10, a first-reagent container 11, a first-reagent dispensing system 12, a specimen transfer unit 13, a specimen dispensing system 14, a second-reagent container 15, a second-reagent dispensing system 16, a stirring unit 17, a photometry unit 18, and a washing unit 19.

The reaction table 10 transfers the reaction vessel 21 to a predetermined position where the specimen and the reagent are dispensed into the reaction vessel 21 and the stirring, washing, and photometry of the reaction vessel 21 are performed. The reaction table 10 can be rotated around a rotation axis or a vertical axis that crosses the center of the reaction table 10 by a driving system (not shown) that is driven under the control of a control unit 31. A lid (not shown) that can be opened and closed and a constant-temperature chamber (not shown) are arranged above and below the reaction table 10.

The first-reagent container 11 can store plural first-reagent vessels 11a that contain a first reagent, which is one of two reagents to be dispensed into the reaction vessel 21 and is to be dispensed first. In the first-reagent container 11, plural storage rooms are arranged at regular intervals. Each storage room stores the first-reagent vessel 11a in a manner such that the first-reagent vessel 11a can be attached to and detached from the storage room. The first-reagent container 11 can be rotated in the clockwise direction or in the counterclockwise direction so as to transfer the desired first-reagent vessel 11a to a position where the reagent is sucked in by the first-reagent dispensing system 12. A lid (not shown) that can be opened and closed is arranged above the first-reagent container 11. A constant-temperature chamber is arranged below the first-reagent container 11. In this manner, when the first-reagent vessel 11a is stored in the first-reagent container 11 and the lid is closed, the reagent contained in the first-reagent vessel 11a is maintained at a constant temperature. Thus, the reagent contained in the first-reagent vessel 11a is prevented from evaporating or degenerating.

A storage medium is attached to a side surface of the first-reagent vessel. The storage medium stores reagent information that is related to the reagent contained in the first-reagent vessel 11a. The storage medium displays various kinds of coded information and can be read out optically. For example, the reagent information stored in the storage medium is a type of the reagent, expiration date of the reagent, lot number that is lot information, and a bottle number that is bottle information.

A first-reagent reader 11b that optically reads out the storage medium is arranged near the periphery of the first-reagent container 11. The first-reagent reader 11b reads out the information of the storage medium by emitting infrared light or visible light toward the storage medium and then processing reflection light from the storage medium. Alternatively the first-reagent reader 11b may capture an image of the storage medium and reads the image information so as to obtain information of the storage medium.

The first-reagent dispensing system 12 includes an arm that has a probe for sucking in and discharging the first reagent attached to its tip end. The arm can move vertically up and down and can rotate around the vertical axis that crosses the base part of the arm. The first-reagent dispensing system 12 includes a suck-discharge syringe (not shown) or suck-discharge system (not shown) that includes a piezoelectric device. The first-reagent dispensing system 12 uses the probe and sucks in the reagent contained in the first reagent vessel 11a that has been transferred to a predetermined position on the first-reagent container 11, rotates the arm in the clockwise direction as shown in the figure, and dispenses the first reagent into the reaction vessel 21 that has been transferred to a predetermined position on the reaction table 10.

The specimen transfer unit 13 includes plural specimen racks 13b each of which holds plural specimen vessels 13a that contain liquid specimens such as blood and urine. The specimen rack 13b sequentially transfers the specimen vessels 13a therein in the direction shown in the figure. The specimen contained in the specimen vessel 13a that is transferred to a predetermined position on the specimen transfer unit 13 is dispensed by the specimen dispensing system 14 into the reaction vessel 21 that is arranged and transferred on the reaction table 10.

Similarly to the first-reagent dispensing system, the specimen dispensing system 14 includes an arm 14a that has a probe for sucking in and discharging the specimen attached to its tip end. The specimen dispensing system 14 includes a suck-discharge syringe (not shown) or suck-discharge system (not shown) that includes a piezoelectric device. The specimen dispensing system 14 uses the probe and sucks in the specimen contained in the specimen vessel 13a that has been transferred to the predetermined position on the specimen transfer unit 13, rotates the arm 14a in the counterclockwise direction as shown in the figure, and dispenses the specimen into the reaction vessel 21 that has been transferred to a predetermined position on the reaction table 10.

The second-reagent container 15 can store plural second-reagent vessels 15a that contain a second reagent, which is the other of the two reagents that are to be dispensed into the reaction vessel 21 and is to be dispensed after the specimen is dispensed. In the second-reagent container 15, plural storage rooms are arranged at regular intervals and each storage room stores therein the second-reagent vessel 15a that can be attached and detached, similarly to the first-reagent container 11. The second-reagent container 15 can be rotated in the clockwise direction or the counterclockwise direction so as to transfer the desired second-reagent vessel 15a to a position where the reagent is sucked in by the second-reagent dispensing system 16. Similarly to the first-reagent container 11, a lid (not shown) that can be opened and closed is arranged above the second-reagent container 15, and a constant-temperature chamber (not shown) is arranged below the second-reagent container 15. Similarly to the first-reagent vessel 11a, attached to the side surface of the second-reagent vessel 15a is a storage medium that stores reagent information that is related to the second reagent contained in the second-reagent vessel 15a. Furthermore, arranged near the periphery of the second reagent container 15 is a second-reagent reader 15b that has the same functions as the first-reagent reader 11b and optically reads out the storage medium attached to the second-reagent vessel 15a.

Similarly to the first-reagent dispensing system 12, the second-reagent dispensing system 16 includes an arm 16a that has a probe for sucking in and discharging the second reagent attached to its tip end, and a suck-discharge syringe (not shown) or suck-discharge system (not shown) that includes a piezoelectric device. The second-reagent dispensing system 16 uses the probe and sucks in the reagent contained in the second-reagent vessel 15a that has been transferred to a predetermined position on the second-reagent container 15, and dispenses the second reagent into the reaction vessel 21 that has been transferred to a predetermined position on the reaction table 10. Thus, the reagents and specimen are dispensed into the reaction vessel in the following order: first reagent, specimen, and second reagent. The stirring unit 17 stirs the first reagent, the specimen, and the second-reagent, which have been dispensed into the reaction vessel 21, so that the reaction is facilitated.

The photometry unit 18 performs an optical measurement such as a spectral intensity analysis, in which the photometry unit 18 emits light of a predetermined wavelength toward the reaction vessel 21 and receives the light that transmits through the first reagent, through the mixed liquid of the first reagent and the specimen, or through the reaction liquid of the first reagent, the specimen, and the second reagent. The result of the measurement performed by the photometry unit 18 is output to the control unit 31 and analyzed by an analysis unit 34.

The washing unit 19 washes the reaction vessel 21. The washing unit 19, using a nozzle (not shown), first sucks in the mixed solution in the reaction vessel 21 that has been measured by the photometry unit 18 and discharges the same. Then, the washing unit 19 injects a washing liquid such as detergent and cleaning water and sucks in the same. The reaction vessel 21, which has been washed, is used again, but may be disposed after each measurement depending on the content of the measurement.

Subsequently, the control system 3 will be described below. The control system 3 includes the control unit 31, an input unit 33, the analysis unit 34, a storage unit 35, an output unit 36, and a transceiving unit 38. Each of the units in the measurement system 2 and the control system 3 is electrically connected with the control unit 31.

The control unit 31 includes a CPU and the like and controls the process and operation in each of the units of the analyzer 1. The control unit 31 controls input and output of information of those units in a predetermined manner and processes the information in a predetermined manner. The control unit 31 includes a management unit 32.

The analyzer 1 analyzes a calibrator, which shows a known result, actually using a reagent for each analytical item by performing the calibration analysis process, in which a calibration curve for a standard of the photometry process is set, for each analytical item. Furthermore, the analyzer 1 performs for each analytical item the blank analysis process, in which the calibration curve that has been set during the calibration analysis process is corrected based on the analysis result obtained by analyzing blank samples such as ion-exchange water and normal saline. In the analyzer 1 in accordance with the embodiment, the initiation timings of the calibration analysis process and the blank analysis process are independently managed, and thus the calibration analysis process and the blank analysis process can be independently performed. When the calibration analysis process is performed and the calibration curve is set, it is preferable that the blank analysis process be also performed to correct the calibration curve that has been set.

The management unit 32 independently manages the initiation timings of the calibration analysis process and the blank analysis process for each analytical item. The management unit 32 performs at least the blank analysis process before the expiration date for managing accuracy of the blank analysis process result is expired and when the reagent is supplied. The management unit 32 performs the calibration analysis process before the expiration date for managing accuracy of the calibration analysis process result is expired and when the reagent is supplied.

The expiration date for managing accuracy of the calibration analysis process result, i.e., calibration data, is a period of time during which accuracy of the calibration curve is maintained. The expiration date is obtained based on the stability of the reagent and the stability of the operations performed by each system of the analyzer 1. For each analytical item, the management unit 32 obtains the expiration date of the calibration analysis process result based on the date of the calibration analysis process and the stability duration for managing accuracy of the calibration analysis process result. The stability duration of the calibration data is set for each analytical item based on how much the reagent is deteriorated and how much the photometry of the photometry unit 18 is dispersed. After each calibration analysis process is performed, the calibration analysis process needs to be performed again before the expiration date of the calibration data is expired.

The expiration date for managing accuracy of the blank analysis process result, i.e., blank data, is a period of time during which accuracy of the calibration curve correction is maintained. The expiration date is obtained based on the stability of the reagent and the stability of the operations performed by each system of the analyzer 1. For each analytical item, the management unit 32 obtains the expiration date of the blank analysis process result based on the date of the blank analysis process and the stability duration for managing accuracy of the blank analysis process result. The stability duration of the blank data is set for each analytical item based on how much the reagent is deteriorated and how much the photometry of the photometry unit 18 is dispersed. After each blank analysis process is performed, the blank analysis process needs to be performed again before the expiration date of the blank data is expired.

The management unit 32 performs the calibration analysis process corresponding to the lot information and the bottle information of the reagent that has been supplied. Furthermore, the management unit 32 performs the blank analysis process corresponding to the lot information and the bottle information of the reagent that has been supplied. For example, the lot information is a lot number, and the bottle information is a bottle number.

The management unit 32 performs the calibration analysis process corresponding to the lot information of the reagent. In more detail, the management unit 32 performs the calibration analysis process when the lot information of the supplied reagent is different from the lot information of the reagent used in the calibration analysis process that has already been performed. When the lot information of the supplied reagent is the same as the lot information of the reagent used in the calibration analysis process that has already been performed, the management unit 32 manages the accuracy of the analysis of the analyzer using the calibration analysis process result corresponding to the reagent having the same lot information. Further, the management unit 32 performs the blank analysis process corresponding to the lot information of the reagent. In more detail, the management unit 32 performs the blank analysis process when the lot information of the supplied reagent is different from the lot information of the reagent used in the blank analysis process that has already been performed. When the lot information of the supplied reagent is the same as the lot information of the reagent used in the blank analysis process that has already been performed, the management unit 32 manages the accuracy of the analysis of the analyzer using the blank analysis process result corresponding to the reagent having the same lot information.

The management unit 32 stores the initiation timings of the calibration analysis process and the blank analysis process for each analytical item in the storage unit 35 described later. The management unit 32 also stores the expiration date of the calibration data and the expiration date of the blank data for each analytical item in the storage unit 35 described later. For example, when the initiation timing of the calibration analysis process is determined by each bottle, the management unit 32 stores the expiration date of the calibration data in the storage unit 35 in association with the bottle number of the reagent bottle used in the calibration analysis process corresponding to the calibration data. When the initiation timing of the calibration analysis process is determined by each lot, the management unit 32 stores the expiration date of the calibration data in the storage unit 35 in association with the lot number of the reagent bottle used in the calibration analysis process corresponding to the calibration data. When the management unit 32 stores the expiration date of the calibration data in the storage unit 35 in association with both the bottle number and the lot number of the reagent bottle, the calibration analysis process may be set in a manner such that the calibration analysis process is definitely performed before the expiration date of the calibration data is expired regardless of the initiation timing of the calibration analysis process.

Similarly, when the initiation timing of the blank analysis process is determined by each bottle, the management unit 32 stores the expiration date of the blank data in the storage unit 35 in association with the bottle number of the reagent bottle used in the blank analysis process corresponding to the blank data. When the initiation timing of the blank analysis process is determined for each lot, the management unit 32 stores the expiration date of the blank data in the storage unit 35. The expiration date is associated with the lot number of the reagent bottle used in the blank analysis process corresponding to the blank data. When the management unit 32 stores the expiration date of the blank data in the storage unit 35 in association with both the bottle number and the lot number of the reagent bottle, the blank analysis process may be set in a manner such that the blank analysis process is definitely performed before the expiration date of the blank data is expired regardless of the initiation timing of the blank analysis process.

The management unit 32 performs the calibration analysis process when the management unit 32 determines that the expiration date of the calibration data is to be expired in a first predetermined period of time. The first predetermined period of time is set based on the period of time that is required for the calibration analysis process. The management unit 32 performs the calibration analysis process in a manner such that the expiration date of the calibration data is not expired before the next calibration analysis process is completed.

The management unit 32 performs the calibration analysis process along with the blank analysis process when the management unit determines that the expiration date of the blank data is to be expired in a second predetermined period of time and the expiration date of the calibration data is to be expired in a third predetermined period of time. The second predetermined period of time is set based on the period of time that is required for the blank analysis process. The third predetermined period of time is set based on the period of time that is required for the calibration analysis process and the blank analysis process. The management unit 32 performs the blank analysis process in a manner such that the expiration date of the blank data is not to be expired before the next blank analysis process is completed. Further, the management unit 32 performs the calibration analysis process along with the blank analysis process in a manner such that the expiration date of the calibration data is not to be expired while the blank analysis process is being performed.

The input unit 33 can be a keyboard, a mouse, and the like. The input unit 33 obtains various kinds of information required for analysis of specimens and instruction information of the analysis operation from the outside. The input unit 33 functions as a setting unit that sets the initiation timings of the calibration analysis process and the blank analysis process for each analytical item.

To analyze constituents of the specimen, the analysis unit 34 calculates, based on spectral intensity that is measured by the photometry unit 18, absorbance and the like of the following: the first reagent; the mixed solution of the first reagent and the specimen; or the reaction liquid of the first reagent, the specimen, and the second reagent. The analysis unit 34 outputs the calculated absorbance to the control unit 31.

The storage unit 35 includes a hard disk, which magnetically stores information therein, and a memory, which loads various programs related to a process from the hard disk and electrically stores those programs therein when the analyzer 1 performs the process. The storage unit 35 stores therein various information such as the analysis result of the specimen. The storage unit 35 may further include a supplementary storage device that can read out information stored in a storage medium such as CD-ROM, DVD-ROM, and a PC card. The storage unit 35 stores therein the initiation timings of the calibration analysis process and the blank analysis process for each analytical item, along with the calibration data and the blank data. The management unit 32 performs the calibration analysis process and the blank analysis process referring to each of the initiation timings stored in the storage unit 35. The storage unit 35 stores therein the stability duration of the calibration data and stability duration of the blank data for each analytical item. The storage unit 35 stores therein the validity duration of each calibration data and the validity duration of each blank data that have been obtained by the management unit 32, for each analytical item.

The output unit 36 includes a printer, a speaker, and the like, and outputs various information including the analysis result of the specimen. The output unit 36 further includes a display unit 37. The display unit 37 includes a display and the like and displays the analysis result. The display unit 37 outputs the expiration date of the calibration data and the expiration date of the blank data that have been obtained by the management unit 32 so that those expiration dates are displayed. The transceiving unit 38 functions as an interface that transmits and receives information on a communication network (not shown) in a predetermined format.

In the analyzer 1 that is configured as above, the first-reagent dispensing system 12 dispenses the first reagent from the first-reagent vessel 11a into the reaction vessels 21 that are sequentially transferred in a line, the specimen dispensing system 14 dispenses the specimen from the specimen vessel 13a into the reaction vessels 21, and the second-reagent dispensing system 16 dispenses the second reagent from the second-reagent vessel 15a into the reaction vessels 21. Then, the photometry unit 18 optically measures the reaction liquid of the specimen and the reagent, and the analysis unit 34 analyzes the measurement result. Thus, the constituents of the specimen are automatically analyzed. Furthermore, the washing unit 19 washes the reaction vessels 21 that have been measured by the photometry unit 18 while the reaction vessels 21 are transferred. In this way, the series of analysis operations are repeatedly performed.

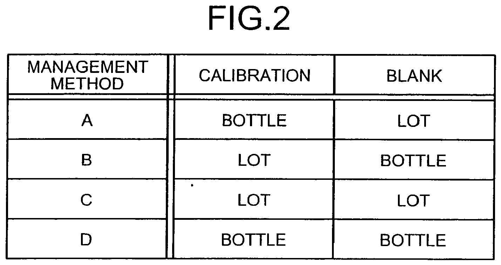

The initiation timings of the calibration analysis process and the blank analysis process in the analyzer 1 will be described with reference to FIG. 2. FIG. 2 is an illustration of the initiation timings of the calibration analysis process and the blank analysis process in the analyzer 1. As shown in FIG. 2, in the analyzer 1, the initiation of the calibration analysis process and the blank analysis process are managed by each bottle or each lot. For example, in the management method A, the calibration analysis process is performed on each bottle while the blank analysis process is performed on each lot. In the management method A, the calibration analysis process is performed every time the reagent bottle is supplied. Further, in the management method A, the blank analysis process is performed every time the reagent bottle is supplied that has a different lot number from lot numbers of reagent bottles used in the blank analysis process that has already been performed. In the management method B, the calibration analysis process is performed on each lot while the blank analysis process is performed on each bottle. In the management method B, the calibration analysis process is performed every time the reagent bottle is supplied that has a different lot number from lot numbers of reagent bottles used in the blank analysis process that has already been performed. Further, in the management method B, the blank analysis process is performed every time the reagent bottle is supplied. In the management method C, the calibration analysis process is performed on each lot and the blank analysis process is performed on each lot. In the management method D, the calibration analysis process is performed on each bottle and the blank analysis process is performed on each bottle. In the analyzer 1, the calibration analysis process and the blank analysis process are managed using one of the management methods A to D for each analytical item. Whether the calibration analysis process and the blank analysis process are performed on each lot or each bottle is determined based on the stability of each reagent and stability of the operations performed by each system of the analyzer 1.

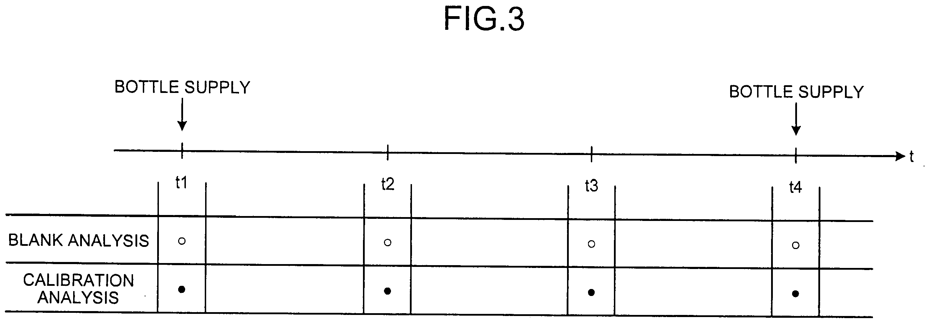

As shown in FIG. 3, conventionally, the calibration process and the blank analysis process are usually performed together, not independently, when the reagent bottle is supplied. In this way, both the calibration analysis process and the blank analysis process are performed at the time t1 and the time t4, when another bottle is supplied. Further, after the reagent bottle is supplied, both the calibration analysis process and the blank analysis process are performed at the time t2 and the time t3, at which the calibration data expiration date is not expired yet. As such, conventionally, the calibration analysis process and the blank analysis process are always performed together, and the conventional way of performing the calibration analysis process causes a problem of spending high cost when the calibrator or the reagent is expensive.

In the analyzer 1 in accordance with the embodiment, the initiation timings of the calibration analysis process and the blank analysis process are independently managed.

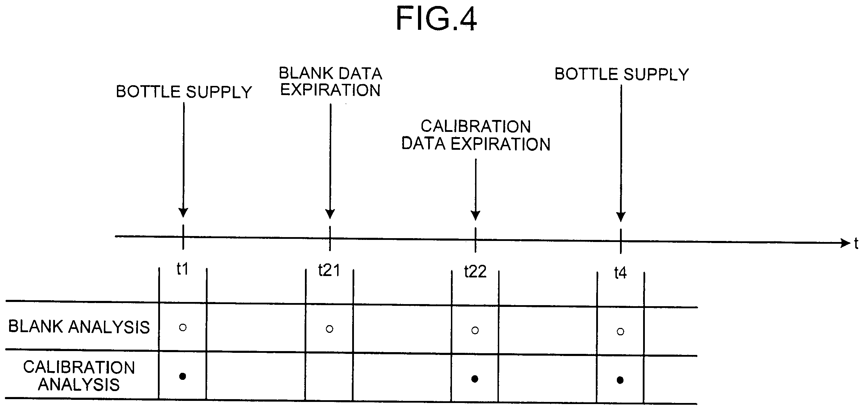

The calibration analysis process and the blank analysis process in the analyzer 1 will be described with reference to FIG. 4, taking as an example an analytical item in which the calibration analysis process and the blank analysis process are performed on each bottle according to the management method D shown in FIG. 2. As shown in FIG. 4, the calibration analysis process and the blank analysis process are performed on each bottle according to the management method D, and therefore the calibration analysis process and the blank analysis process are performed at the time t1 and t4. Further, in the analyzer 1, the blank analysis process is performed at the time t21, at which the expiration date of the blank data of the blank analysis process that has been performed at the time t1 expires. The calibration analysis process is performed at the time t22, at which the calibration data obtained at the time t1 expires.

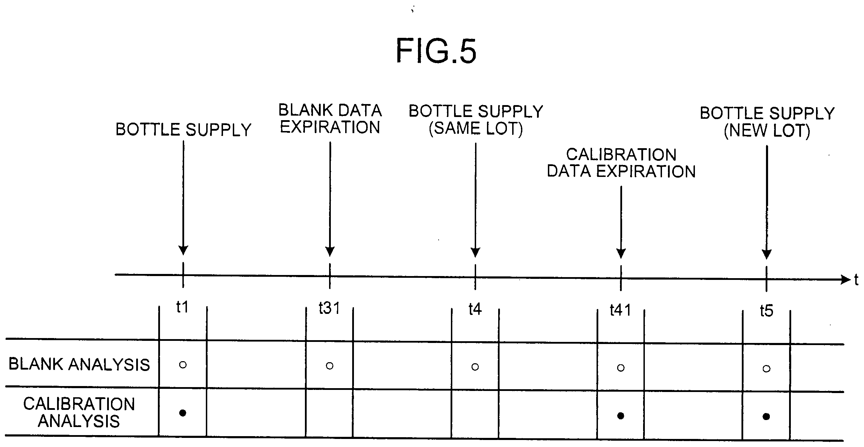

The calibration analysis process and the blank analysis process in the analyzer 1 will be described with reference to FIG. 5, taking as an example an analytical item in which the calibration analysis process is performed on each lot and the blank analysis process is performed on each bottle according to the management method B shown in FIG. 2. The blank analysis process is performed on each bottle according to the management method B. Therefore, as shown in FIG. 5, the blank analysis process is performed at the time t1, t4, and t5, when the reagent bottle is supplied. The calibration analysis process is performed on each lot according to the management method B. Therefore, when the reagent bottle is supplied at the time t4 that has the same lot as the reagent bottle used in the calibration analysis process that has already been performed at the time t1, the calibration analysis process is not performed, and the calibration curve set in the calibration analysis process at the time t1 continues to be used. When the reagent bottle is supplied at the time t5 that has a new, different lot number from the reagent bottle used in the calibration analysis process that has already been performed at the time t1, the calibration analysis process is performed along with the blank analysis process. As described above, in the analyzer 1, the calibration analysis process and the blank analysis process are independently performed according to the management method being set when the reagent is supplied. In the analyzer 1, as shown in FIG. 5, the blank analysis process is performed at the time t31, at which the expiration date of the blank data obtained in the blank analysis process that has been performed at the time t1 expires. The calibration analysis process is performed at the time t41, at which the expiration date of the calibration data obtained at the time t1 expires.

In the analyzer 1, the calibration analysis process and the blank analysis process are independently performed and managed based on the management method being set and the expiration dates. Therefore, when it is not needed to set the calibration curve again, the analyzer 1 performs only the blank analysis process, in which the calibration curve is corrected. The analyzer 1 performs the calibration analysis process only when it is needed to do so, whereby the cost of the calibration analysis process can be reduced while the analysis accuracy of the analyzer is maintained.

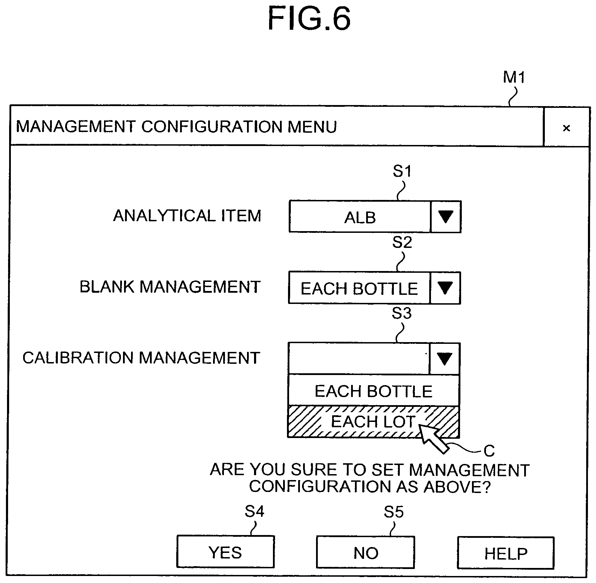

Subsequently, the way to set the management method will be described with reference to FIG. 6. When an operator uses and controls the input unit 33, the display unit 37 displays a management setting menu M1 illustrated in FIG. 6 on its display screen.

The management setting menu M1 includes a selection field S1 for selecting a desirable analytical item for the setting of the management of the initiation timings, a selection field S2 for selecting the initiation timing of the blank analysis process as each bottle or each lot, and a selection field S3 for selecting the initiation timing of the calibration analysis process as each bottle or each lot. The operator controls a mouse to select each item of the selection fields s1 to S3. For example, in order to perform the calibration analysis process in each lot, the operator controls the mouse and moves a cursor C to an area where "each lot" is displayed in the selection field S3 and clicks a left button of the mouse. After the desirable items are selected in the selection fields, the operator selects a selection field S4 for setting the selected configurations.

Then, setting instruction information that indicates the management methods corresponding to the selected configurations in the selection fields S1 to S3 is output from the input unit 33 to the control unit 31. The management unit 32 overwrites the contents of those management methods, of the management methods stored in the storage unit 35, which correspond to the output setting instruction information. When it is no longer needed to configure the management method, the operator selects a selection field S5 for selecting not to set the configuration of the management method. The operator of the analyzer 1 can flexibly configure the initiation timings of the calibration analysis process and the blank analysis process. Although, in the above description, the management setting menu M1 is used by the operator to configure the initiation timings of the calibration analysis process and the blank analysis process, the initiation timings of the calibration analysis process and the blank analysis process in the analyzer 1 may be previously configured for each analytical item.

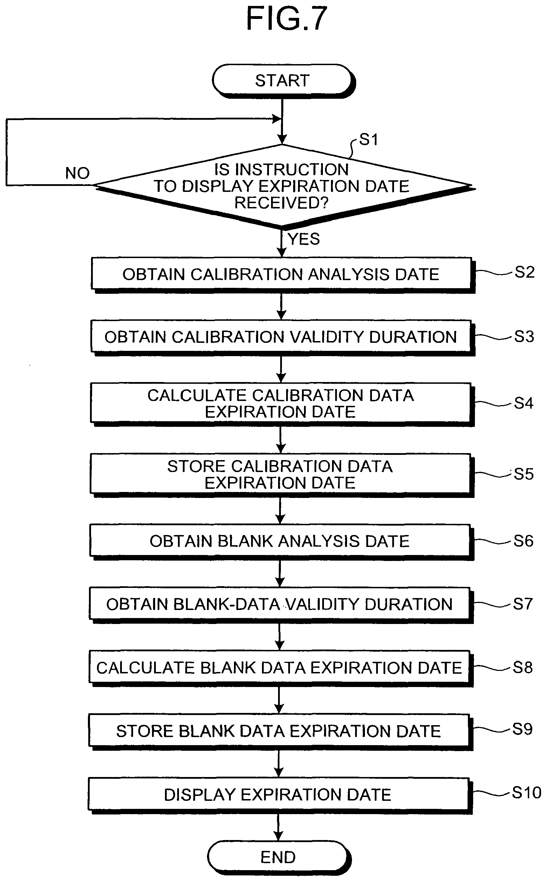

The following describes a procedure in the analyzer 1 in which the expiration date of the calibration analysis process and the expiration date of the blank analysis process are output to be displayed. FIG. 7 is a flowchart of a procedure in the analyzer 1 in which the expiration date of the calibration analysis process and the expiration date of the blank analysis process are output to be displayed.

As shown in FIG. 7, the management unit 32 determines whether there is an instruction to display the expiration date of the calibration data and the expiration date of the blank data (Step S1). For example, when the operator controls the input unit 33 and selects the selection field corresponding to the display of the expiration date of the calibration data and the expiration date of the blank data from the menu displayed on the display screen of the display unit 37, the instruction information to display the expiration date of the calibration data and the expiration date of the blank data is input from the input unit 33 to the control unit 31.

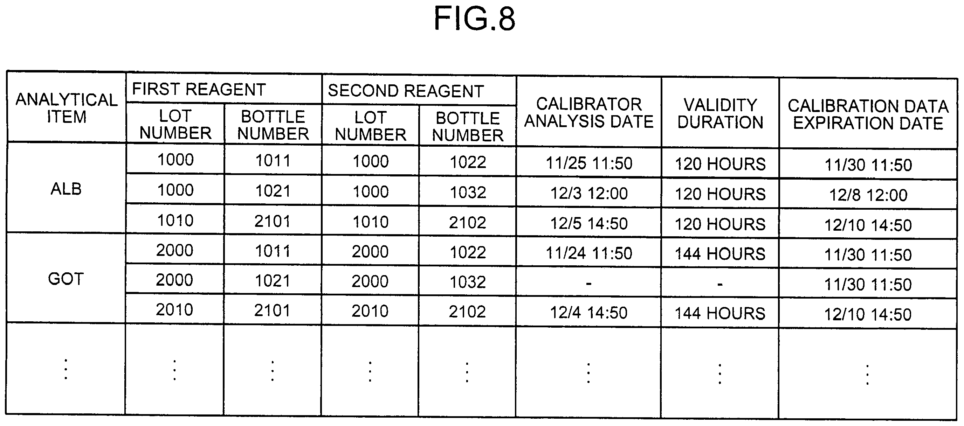

The management unit 32 continues to perform the determination process at Step S1 until there is an instruction to display the expiration date of the calibration data and the expiration date of the blank data. When the management unit 32 determines that there is an instruction to display the expiration date of the calibration data and the expiration date of the blank data (Step S1: Yes), and obtains the last calibration analysis process date at which the last calibration analysis process was performed for the analytical item according to the instruction (Step S2). For example, as shown in FIG. 8, the last calibration analysis process dates are stored in the storage unit 35 in association with analytical items, lot numbers and bottle numbers of the first reagent and the second reagent that are used for the analytical items. Such information is obtained by the first-reagent reader 11b and the second-reagent reader 15b that read out the storage medium attached to each reagent bottle and is stored in the storage unit 35.

The management unit 32 then obtains the validity duration of the calibration data for the instructed analytical item (Step S3). For example, as shown in FIG. 8, the validity duration of the calibration data is stored in the storage unit 35 in association with the analytical item.

The management unit 32 then calculates the expiration date of the calibration data (Step S4). The management unit 32 adds the validity duration of the calibration data to the last calibration analysis process date so as to calculate the expiration date of the calibration data. For example, as shown in FIG. 8, in the analytical item ALB with the first reagent having the lot number 1000 and the bottle number 1011 and the second reagent having the lot number 1000 and the bottle number 1022, the management unit 32 adds the validity duration 120 hours to the last calibration analysis process date "11/25 11:50" so as to obtain the expiration date of the calibration data "11/30 11:50".

The management unit 32 then stores the expiration date of the calculated calibration data in the storage unit (Step S5). As a result, as shown in FIG. 8, the expiration date of each calibration data is stored in the storage unit 35 in association with the analytical item and the corresponding reagent information. When the calibration analysis process is performed for the same combination of the reagent bottles plural times and therefore there are plural calibration data for the same combination of the reagent bottles, the expiration dates of all calibration data may be stored in the storage unit 35 or only the expiration date of the calibration data of the last calibration analysis process may be stored therein. Further, when the calibration analysis process is performed for the combination of the reagent bottles having the same lot number plural times and therefore there are plural calibration data, the expiration dates of all calibration data may be stored in the storage unit 35 or only the expiration date of the calibration data of the last calibration analysis process may be stored therein.

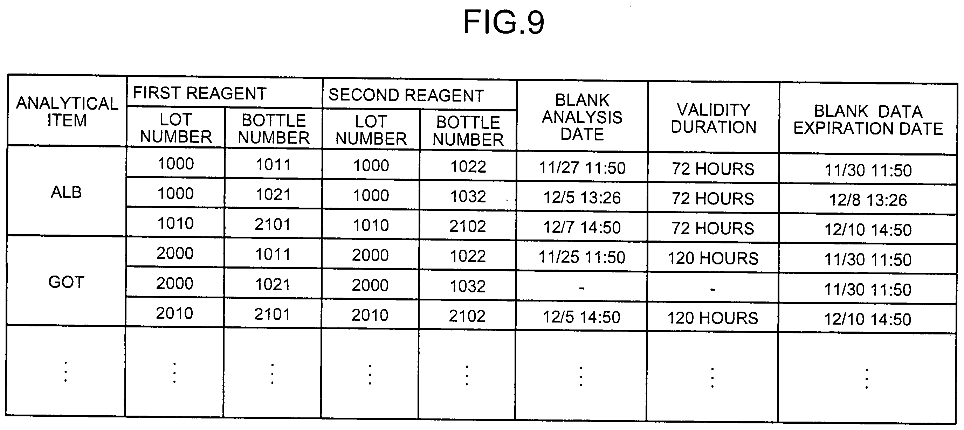

The management unit 32 then obtains the last blank analysis process date for the instructed analytical item (Step S6). For example, as shown in FIG. 9, the last blank analysis process dates are stored in the storage unit 35 in association with the analytical items, lot numbers and bottle numbers of the first reagent and the second reagent.

The management unit 32 then obtains the validity duration of the blank data for the instructed analytical item (Step S7). For example, as shown in FIG. 9, the validity durations of each blank data are stored in the storage unit 35 in association with the analytical items.

The management unit 32 then calculates the expiration date of the blank data (Step S8). The management unit 32 adds the validity duration of the blank data to the last blank analysis process date so as to calculate the expiration date of the blank data. For example, as shown in FIG. 9, in the analytical item ALB with the first reagent having the lot number 1000 and the bottle number 1011 and the second reagent having the lot number 1000 and the bottle number 1022, the management unit 32 adds the validity duration 72 hours to the last blank analysis process date "11/27 11:50" so as to obtain the expiration date of the blank data "11/30 11:50".

The management unit 32 stores the expiration date of the calculated blank data in the storage unit (Step S9). As a result, as shown in FIG. 9, the expiration date of each blank data is stored in the storage unit 35 in association with the analytical item and the corresponding reagent information. When the blank analysis process is performed for the same combination of the reagent bottles plural times and therefore there are plural blank data for the same combination of the reagent bottles, the expiration dates of all blank data may be stored in the storage unit 35 or only the expiration date of the blank data of the last blank analysis process may be stored therein. Further, when the blank analysis process is performed for the combination of the reagent bottles having the same lot number plural times and therefore there are plural blank data, the expiration dates of all blank data may be stored in the storage unit 35 or only the expiration date of the blank data of the last blank analysis process may be stored therein. Although each item has two reagents in FIGS. 1, 8, and 9, the number of reagents is not limited to this. When each item has one reagent, the storage unit 35 stores therein the reagent information of the first reagent. When each item has three reagents, the storage unit 35 stores therein the reagent information of the first reagent, the second reagent, and the third reagent.

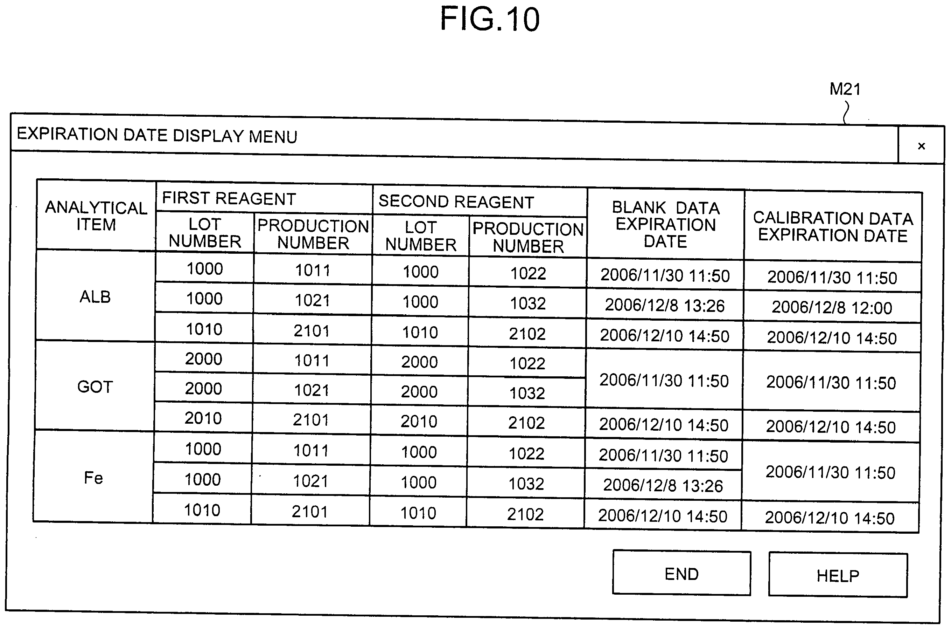

Subsequently, the control unit 31 obtains the expiration date of the calibration data and the expiration date of the blank data for the analytical item that is instructed to be displayed from the storage unit 35. The control unit 31 displays the expiration date of the calibration data and the expiration date of the blank data for the analytical item that is instructed to be displayed on the display unit 37 (Step S10). In this case, the display unit 37 displays an expiration date display menu M21 shown in FIG. 10. In the expiration date display menu M21, the lot number and the bottle number of each reagent is displayed in association with the expiration date of the calibration data and the expiration date of the blank data for each analytical item that is instructed to be displayed. The operator can check the expiration dates of the calibration data and the blank data for each analytical item by referring to the expiration date display menu M21. Thus, the operator can definitely check until when the calibration analysis process or the blank analysis process or both are to be performed for each analytical item by referring to the expiration date display menu M21, whereby the calibration analysis process and/or the blank analysis process can be performed according to the plan.

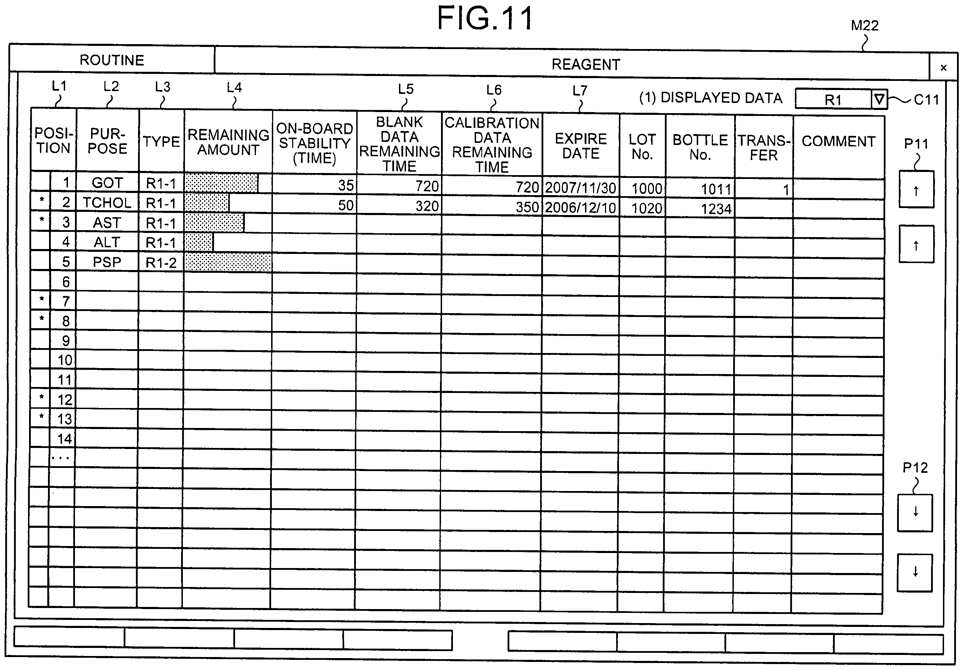

The display unit 37 may display not only the expiration date display menu M21 shown in FIG. 10 but also an expiration date display menu M22 shown in FIG. 11. The expiration date display menu M22 displays a column L1 that shows a stored position in the reagent container, a column L2 that shows the analytical item, a column L3 that shows types of the reagent, a column L4 that shows the remaining amount of the reagent, a column L7 that shows the expiration date, a column L5 that shows a blank data remaining time that is a remaining time before the blank expiration date, and a calibration data remaining time L6 that shows a remaining time before the calibration expiration date. Thus, the operator can easily check the expiration date.

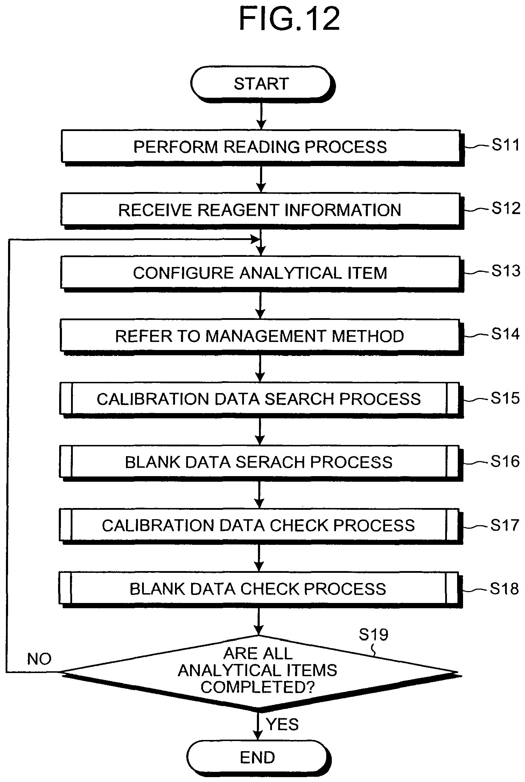

Next, a management process for managing the calibration analysis process and the blank analysis process in the analyzer 1 will be described in detail. FIG. 12 is a flowchart of a procedure for managing the calibration analysis process and the blank analysis process in the analyzer 1.

Firstly, in the analyzer 1, the first-reagent reader 11b and the second-reagent reader 15b perform a reading process for reading out the reagent information stored in the storage medium attached to the reagent bottle that has been newly supplied (Step S11). The control unit 31 receives the reagent information that has been read out by the first-reagent reader 11b and the second-reagent reader 15b (Step S12) so as to check the analytical item corresponding to the supplied reagent. The management unit 32 then sets up the analytical item corresponding to the supplied reagent as a target for the management process of the calibration analysis process and the blank analysis process (Step S13). The management unit 32 then refers to the management method of the analytical item being set as the management processes target from methods stored in the storage unit 35 so as to check the initiation timings of the calibration analysis process and the blank analysis process (Step S14).

The management unit 32 performs a calibration data search process for searching for the calibration data that corresponds to the contents of the management method being referred to from the storage unit 35 (Step S15). When the initiation timing of the calibration analysis process is set on each lot, the management unit 32 searches for the calibration data having the same lot number as the lot number of the reagent bottle. When the calibration data that corresponds to the management method being referred to is not found in the storage unit 35 in the calibration data search process, the management unit 32 accepts the calibration analysis process in association with the management method being referred to.

The management unit 32 performs a blank data search process for searching for the blank data that corresponds to the management method being referred to from the storage unit 35 (Step S16). When the initiation timing of the blank analysis process is set on each lot, the management unit 32 searches for the blank data having the same lot number as the lot number of the reagent bottle. When the blank data that corresponds to the management method being referred to is not found in the storage unit 35 in the blank data search process, the management unit 32 accepts the blank analysis process in association with the management method being referred to.

The management unit 32 then performs a calibration data check process (Step S17) for checking the expiration date of the calibration data that has been obtained at the calibration data search process at Step S15. When the management unit 32 determines that the expiration date of the obtained calibration data is to be expired in the calibration data check process, the management unit 32 accepts the calibration analysis process in association with the management method being referred to.

Subsequently, the management unit 32 performs a blank data check process (Step S18) for checking the expiration date of the blank data that has been obtained at the blank data search process at Step S16. When the management unit 32 determines that the expiration date of the obtained blank data is to be expired in the blank data check process, the management unit 32 accepts the blank analysis process in association with the management method being referred to.

The management unit 32 then determines whether the management of the calibration analysis process and the blank analysis process is completed in all analytical items to be managed (Step S19). When the management unit 32 determines that the management is not completed (Step S19: No), the management unit 32 returns to Step S13 and repeats the subsequent processes. When the management unit 32 determines that the management is completed (Step S19: Yes), the management unit 32 ends its management process.

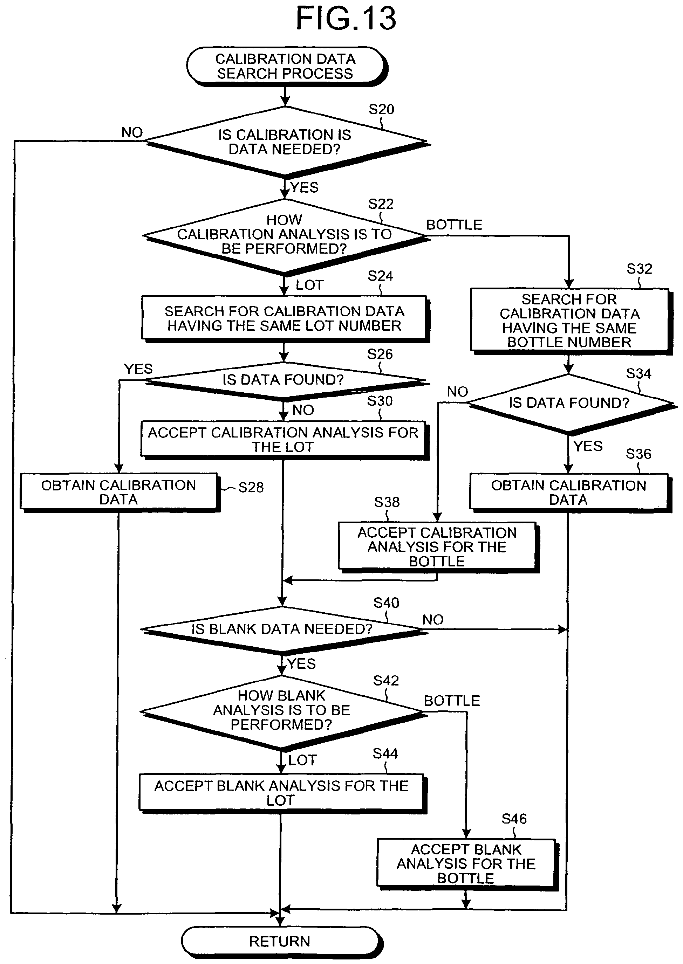

The calibration data search process shown in FIG. 12 will be described below. FIG. 13 is a flowchart of a procedure of the calibration data search process shown in FIG. 12. As shown in FIG. 13, the management unit 32 refers to the management method of the analytical item and determines whether the calibration analysis process needs to be performed, i.e., whether the calibration data is needed, for the analytical item to be managed (Step S20). When the management unit 32 determines that the calibration data is not needed for the analytical item to be managed (Step S20: No), it is unnecessary to obtain the calibration data and therefore the calibration data search process ends.

In contrast, when the management unit 32 determines that the calibration data is needed for the analytical item to be managed (Step S20: Yes), the management unit 32 refers to the management method and determines whether the initiation timing of the calibration analysis process is set on each lot or each bottle for the analytical item to be managed (Step S22).

When the management unit 32 refers to the management method and determines that the initiation timing of the calibration analysis process is set on each lot for the analytical item to be managed (Step S22: Lot), the management unit 32 searches for the calibration data having the same lot number as the reagent bottle used for the analytical item to be managed from the storage unit 35 (Step S24). In this case, the management unit 32 searches for the lot number of the reagent bottle that is newly supplied.

The management unit 32 then determines whether there is calibration data having the same lot number as the reagent bottle used for the analytical item to be managed in the storage unit 35 (Step S26). When the management unit 32 determines that there is the calibration data having the same lot number as the reagent bottle used for the analytical item to be managed (Step S26: Yes), the management unit 32 obtains this calibration data as the calibration data for the lot number of the reagent bottle used for the analytical item to be managed (Step S28) and ends the calibration data search process.

In contrast, when the management unit 32 determines that there is no calibration data having the same lot number as the reagent bottle used for the analytical item to be managed (Step S26: No), the management unit 32 needs to perform the calibration analysis process to obtain the calibration data. In this case, the management method of the calibration analysis process is set as lot unit, and thus the management unit 32 accepts the calibration analysis process for this lot number (Step S30). Then, an acceptance menu for accepting a request of the calibration analysis process is displayed on the screen of the display unit 37. The operator uses the input unit 33 such as the mouse and the keyboard to select a calibration analysis process acceptance field of the analytical item to be managed in the acceptance menu. Then, the instruction information for instructing the control unit 31 to perform the calibration analysis process for the analytical item to be managed is input from the input unit 33 to the control unit 31. The calibrator that is set by the operator is analyzed actually using the reagent for the analytical item to be managed. In the calibration analysis process, the calibration curve of the analytical item to be managed is set based on the analysis result. The calibration data of the calibration analysis process performed according to the acceptance is stored in the storage unit 35 in association with the lot number at the time of acceptance.

When the management unit 32 refers to the management method and determines that the initiation timing of the calibration analysis process is set on each bottle for the analytical item to be managed (Step S22: Bottle), the management unit 32 searches for the calibration data having the same bottle number as the reagent bottle used for the analytical item to be managed from the storage unit 35 (Step S32).

The management unit 32 then determines whether there is calibration data having the same bottle number as the reagent bottle used for the analytical item to be managed in the storage unit 35 (Step S34). When the management unit 32 determines that there is the calibration data having the same bottle number as the reagent bottle used for the analytical item to be managed (Step S34: Yes), the management unit 32 obtains this calibration data as the calibration data that corresponds to the bottle number of the reagent bottle used for the analytical item to be managed (Step S36) and ends the calibration data search process.

In contrast, when the management unit 32 determines that there is no calibration data having the same bottle number as the reagent bottle used for the analytical item to be managed (Step S34: No), the management unit 32 needs to perform the calibration analysis process to obtain the calibration data. In this case, because the management method of the calibration analysis process is set as bottle unit, the management unit 32 accepts the calibration analysis process for this bottle number (Step S38). The calibration data of the calibration analysis process performed according to the acceptance is stored in the storage unit 35 in association with the bottle number at the time of acceptance.

After the acceptance of the calibration analysis process at Step S30 and Step S38 is completed, the management unit 32 refers to the management method of the analytical item to be managed and determines whether the blank analysis process needs to be performed, i.e., whether the blank data is needed, for the analytical item to be managed (Step S40). The blank data is needed in order to correct the calibration curve along with the setting of the calibration curve using the calibration data. When the management unit 32 determines that the blank data is not needed (Step S40: No), the management unit 32 ends the calibration search process. In contrast, when the management unit 32 determines that the blank data is needed (Step S40: Yes), the management unit 32 refers to the management method and determines whether the initiation timing of the blank analysis process is set on each lot or each bottle for the analytical item to be managed (Step S42) .

When the management unit 32 determines that the initiation timing of the blank analysis process is set on each lot for the analytical item to be managed (Step S42: Lot), the management unit 32 accepts the blank analysis process for this lot number (Step S44). In this case, an acceptance menu for accepting the request of the blank analysis process is displayed on the screen of the display unit 37. The operator uses the input unit 33 such as the mouse and the keyboard to select a blank analysis process acceptance field of the analytical item to be managed in the acceptance menu. Then, the instruction information for instructing the control unit 31 to perform the blank analysis process for the analytical item to be managed is input from the input unit 33 to the control unit 31. The blank sample that is set by the operator is analyzed actually using the reagent for the analytical item to be managed. In the blank analysis process, the calibration curve of the analytical item to be managed is corrected based on the analysis result. The blank data of the blank analysis process performed according to the acceptance is stored in the storage unit 35 in association with the lot number at the time of acceptance. When the management unit 32 determines that the initiation timing of the blank analysis process is set on each bottle for the analytical item to be managed (Step S42: Bottle), the management unit 32 accepts the blank analysis process for this bottle number (Step S46). The blank data of the blank analysis process performed according to the acceptance is stored in the storage unit 35 in association with the bottle number at the time of acceptance.

As described above, in the calibration search process, the management unit 32 searches for the calibration data that corresponds to the management method. When the calibration data that corresponds to the management method is not found, the management unit 32 accepts the calibration analysis process that corresponds to the management method.

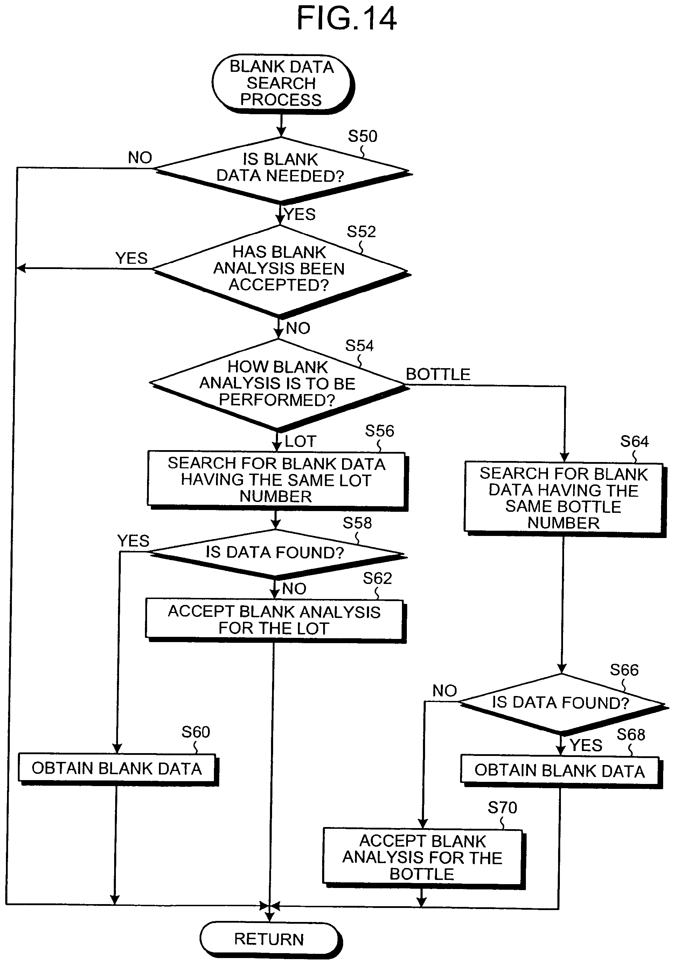

The blank data search process shown in FIG. 12 will be described below. FIG. 14 is a flowchart of a procedure of the blank data search process shown in FIG. 12. As shown in FIG. 14, the management unit 32 refers to the management method of the analytical item and determines whether the blank analysis process needs to be performed, i.e., whether the blank data is needed, for the analytical item to be managed (Step S50). When the management unit 32 determines that the blank data is not needed for the analytical item to be managed (Step S50: No) and therefore the blank data is not needed, the management unit 32 ends the blank data search process.

When the management unit 32 determines that the blank data is needed for the analytical item to be managed (Step S50: Yes), the management unit 32 determines whether the blank analysis process has been accepted in the calibration data search process for the analytical item (Step S52). When the management unit 32 determines that the blank analysis process has been accepted for the analytical item to be managed (Step S52: Yes) and therefore the acceptance of the blank analysis process is not needed, the management unit 32 ends the blank data search process.

When the management unit 32 determines that the blank analysis process has not been accepted for the analytical item to be managed (Step S52: No), the management unit 32 refers to the management method and determines whether the initiation timing of the blank analysis process is set on each lot or each bottle for the analytical item to be managed, so as to obtain the blank data (Step S54).

When the management unit 32 refers to the management method and determines that the initiation timing of the blank analysis process is set on each lot for the analytical item to be managed (Step S54: Lot), the management unit 32 searches for the blank data having the same lot number as the reagent bottle used for the analytical item to be managed from the storage unit 35 for the analytical item to be managed (Step S56). in this case, the management unit 32 searches for the lot number of the reagent bottle that is newly supplied.

The management unit 32 determines whether there is blank data having the same lot number as the reagent bottle used for the analytical item to be managed from the storage unit 35 (Step S58). When the management unit 32 determines that there is the blank data having the same lot number as the reagent bottle used for the analytical item to be managed (Step S58: Yes), the management unit 32 obtains this blank data as the blank data that corresponds to the lot number of the reagent bottle used for the analytical item to be managed (Step S60) and ends the blank data search process.

When the management unit 32 determines that there is no blank data having the same lot number as the reagent bottle used for the analytical item to be managed (Step S58: No), the management unit 32 needs to perform the blank analysis process so as to obtain the blank data. In this case, because the management method of the blank analysis process is set as each lot, the management unit 32 accepts the blank analysis process for this lot number (Step S62) and ends the blank data search process. The blank data of the blank analysis process that is performed according to the acceptance is stored in the storage unit 35 in association with the lot number at the time of acceptance.

When the management unit 32 refers to the management method and determines that the initiation timing of the blank analysis process is set on each bottle for the analytical item to be managed (Step S54: Bottle), the blank data having the same bottle number as the reagent bottle used for the analytical item to be managed is searched from the storage unit 35 for the analytical item to be managed (Step S64).

The management unit 32 then determines whether there is blank data having the same bottle number as the reagent bottle used for the analytical item to be managed from the storage unit 35 (Step S66). When the management unit 32 determines that there is blank data having the same bottle number as the reagent bottle used for the analytical item to be managed (Step S66: Yes), the management unit 32 obtains this blank data as the blank data that corresponds to the bottle number of the reagent bottle used for the analytical item to be managed (Step S68) and ends the blank data search process.

When the management unit 32 determines that there is no blank data having the same bottle number as the reagent bottle used for the analytical item (Step S66: No), the management unit 32 needs to perform the blank analysis process so as to obtain the blank data. In this case, because the management method of the blank analysis process is set as bottle unit, the management unit 32 accepts the blank analysis process for this bottle number (Step S70) and ends the blank data search process. The blank data of the blank analysis process performed according to the acceptance is stored in the storage unit 35 in association with the bottle number at the time of acceptance.

As described above, in the blank data search process, the management unit 32 searches for the blank data that corresponds to the management method. When the blank data that corresponds to the management method is not found, the management unit 32 accepts the blank analysis process in association with the management method.

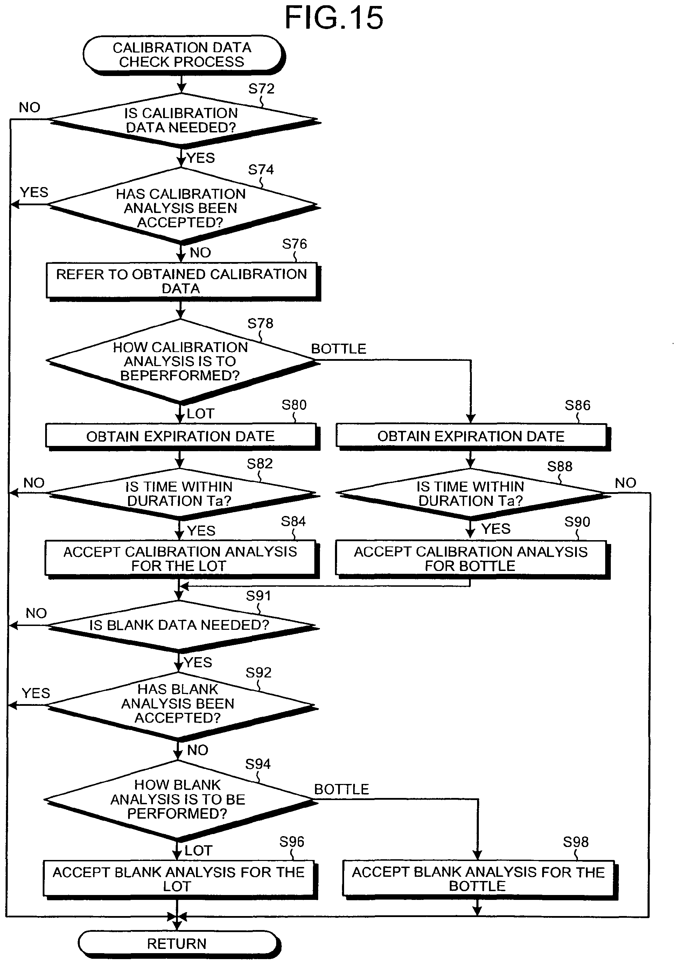

Subsequently, the calibration data check process shown in FIG. 12 will be described. FIG. 15 is a flowchart of a procedure of the calibration data check process shown in FIG. 12. As shown in FIG. 15, the management unit 32 first refers to the management method and determines whether the calibration analysis process needs to be performed, i.e., whether the calibration data is needed, for the analytical item to be managed (Step S72). When the management unit 32 determines that the calibration data is not needed for the analytical item to be managed (Step S72: No) and therefore it is not necessary to obtain the calibration data, the management unit 32 ends the calibration data check process.

In contrast, when the management unit 32 determines that the calibration data is needed for the analytical item to be managed (Step S72: Yes), the management unit 32 determines whether the calibration analysis process has been accepted (Step S74) in the calibration search process. When the management unit 32 determines that the calibration analysis process has been accepted for the analytical item to be managed (Step S74: Yes) and therefore it is not necessary to check the expiration date of the calibration data, the management unit 32 ends the calibration data search process.

On the other hand, when the management unit 32 determines that the calibration analysis process has not been accepted (Step S74: No), the management unit 32 refers to the calibration data that has been obtained by the calibration search process shown in FIG. 13 (Step S76). The management unit 32 refers to the management method and determines whether the initiation timing of the calibration analysis process is set on each lot or each bottle for the analytical item to be managed (Step S78).

When the management unit 32 refers to the management method and determines that the initiation timing of the calibration analysis process is set on each lot for the analytical item to be managed (Step S78: Lot), the management unit 32 obtains the expiration date of the calibration data from the storage unit 35 (Step S80) based on the lot number of the reagent bottle used for the analytical item to be managed. The management unit 32 then determines whether the remaining time before the expiration date of the obtained calibration data is within a predetermined duration Ta (Step S82). The duration Ta corresponds to a first predetermined period of time. The duration Ta is determined by the time required for the whole calibration analysis process or, in more detail, the time required for preparing the calibrator, performing the calibration analysis process, the operator checking the calibration result, and setting the calibration curve. When the remaining time before the expiration date of the obtained calibration data is within the predetermined duration Ta, the calibration analysis process needs to be performed because there is not much remaining time before the expiration date of the calibration data. Unless the calibration analysis process is performed, the expiration data of the calibration data may be expired. When the remaining time before the expiration date of the obtained calibration data is longer than the predetermined duration Ta, it is not necessary to perform the calibration analysis process because there is much remaining time before the expiration date of the calibration data.

Thus, when the management unit 32 determines that the remaining time before the expiration date of the obtained calibration data is longer than the predetermined duration Ta (Step S82: No) and therefore it is not necessary to perform the calibration analysis process, the management unit 32 continues to use the calibration data obtained in the calibration data search process and ends the calibration data check process.

In contrast, when the management unit 32 determines that the remaining time before the expiration date of the obtained calibration data is within the predetermined duration Ta, (Step S82: Yes), the management unit 32 needs to perform the calibration analysis process so as to prevent the expiration date of the calibration data from expiring. Because the management method of the calibration analysis process is set as lot unit, the management unit 32 accepts the calibration analysis process for this lot number (Step S84).

Also, when the management unit 32 refers to the management method and determines that the initiation timing of the calibration analysis process is set on each bottle for the analytical item to be managed (Step S78: Bottle), the management unit 32 refers to the bottle number of the reagent bottle used for the analytical item to be managed and obtains the expiration date of the calibration data from the storage unit 35 (Step S86). The management unit 32 determines whether the remaining time before the expiration date of the obtained calibration data is within the predetermined duration Ta (Step S88).

When the management unit 32 determines that the expiration date of the obtained calibration data is longer than the predetermined duration Ta (Step S88: No) and therefore it is not necessary to perform the calibration analysis process, the management unit 32 continues to use the calibration data obtained in the calibration data search process and ends the calibration data check process.

In contrast, when the management unit 32 determines that the remaining time before the expiration date of the obtained calibration data is within the predetermined duration Ta (Step S88: Yes), the management unit 32 needs to perform the calibration analysis process so as to prevent the expiration date of the calibration data from expiring. Because the management method of the calibration analysis process is set as bottle unit, the management unit 32 accepts the calibration analysis process for this bottle number (Step S90).

After the acceptance of the calibration analysis process at Step S84 or Step S90, the management unit 32 refers to the management method of the analytical item and determines whether the blank analysis process needs to be performed, i.e., whether the blank data is needed, for the analytical item to be managed (step S91). When the management unit 32 determines that the blank data is not needed for the analytical item to be managed (Step S91: No), the management unit 32 ends the calibration data check process.

In contrast, when the management unit 32 determines that the blank data is needed for the analytical item to be managed (Step S91: Yes), the management unit 32 determines whether the blank analysis process has been accepted for the analytical item in the calibration data search process or the blank data search process (Step S92). When the management unit 32 determines that the blank analysis process has been accepted for the analytical item to be managed (Step S92: Yes) and therefore it is not necessary to perform the acceptance for the blank data again, the management unit 32 ends the calibration data check process.

On the other hand, when the management unit 32 determines that the blank analysis process has not been accepted (Step S92: No), the management unit 32 refers to the management method and determines whether the initiation timing of the blank analysis process is set on each lot or each bottle for the analytical item to be managed (Step S94) .

When the management unit 32 refers to the management method and determines that the initiation timing of the blank analysis process is set on each lot for the analytical item to be managed (Step S94: Lot), the management unit 32 accepts the blank analysis process for this lot number because the management method of the blank analysis process is set as lot unit (Step S96) and ends the calibration data check process. The blank data of the blank analysis process performed according to the acceptance is stored in the storage unit 35 in association with the lot number at the time of acceptance.

Also, when the management unit 32 refers to the management method and determines that the initiation timing of the blank analysis process is set on each bottle for the analytical item to be managed (Step S94: Bottle), the management unit 32 accepts the blank analysis process for this bottle number because the management method of the blank analysis process is set as bottle unit (Step S98) and ends the calibration data check process. The blank data of the blank analysis process performed according to the acceptance is stored in the storage unit 35 in association with the bottle number at the time of acceptance.

As described above, in the calibration data check process, the management unit 32 checks the expiration date of the calibration data. Then, the management unit 32 accepts the calibration analysis process according to the management method so as to prevent the expiration date of the calibration data from expiring.

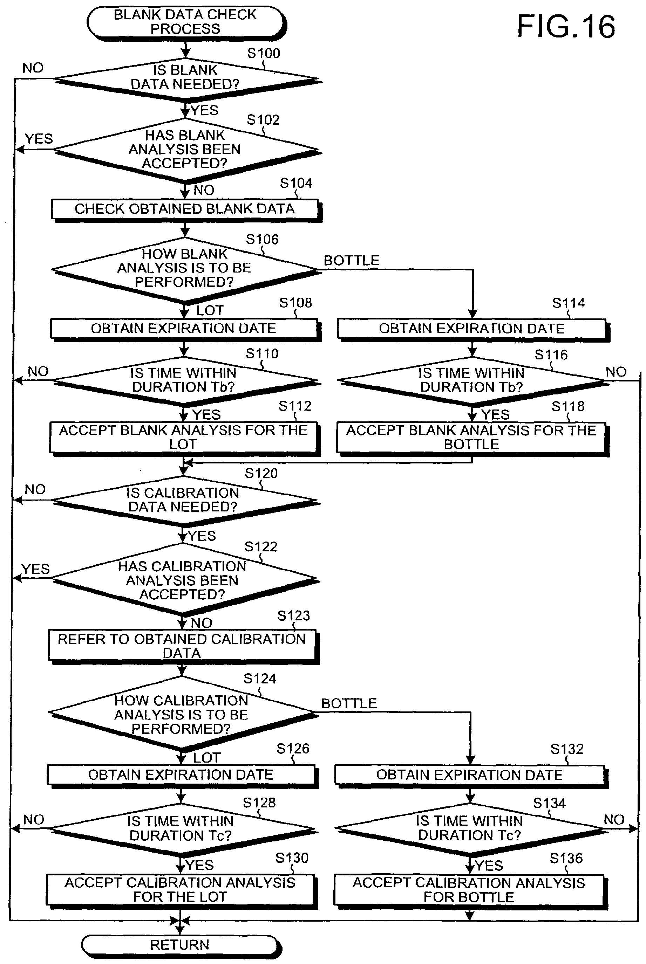

Subsequently, the blank data check process shown in FIG. 12 will be described below. FIG. 16 is a flowchart of a procedure of the blank data check process shown in FIG. 12. As shown in FIG. 16, the management unit 32 refers to the management method and determines whether the blank analysis process needs to be performed, i.e., the blank data is needed, for the analytical item to be managed (Step S100). When the management unit 32 determines that the blank data is not needed for the analytical item to be managed (Step S100: No) and therefore it is not necessary to obtain the blank data, the management unit 32 ends the blank data check process.

In contrast, when the management unit 32 determines that the blank data is needed for the analytical item to be managed (Step S100: Yes), the management unit 32 determines whether the blank analysis process has been accepted in the calibration data search process, the blank data search process, or the calibration data check process (Step S102). When the management unit 32 determines that the blank analysis process has been accepted (Step S102: Yes), the management unit 32 ends the blank data check process because it is not necessary to check the expiration date of the blank data.

On the other hand, when the management unit 32 determines that the blank analysis process has not been accepted (Step S102: No), the management unit 32 refers to the blank data obtained in the blank search process shown in FIG. 14 (Step S104). The management unit 32 refers to the management method and determines whether the initiation timing of the blank analysis process is set on each lot or each bottle for the analytical item to be managed (Step S106) .

When the management unit 32 refers to the management method and determines that the initiation timing of the blank analysis process is set on each lot for the analytical item to be managed (Step S106: Lot), the management unit 32 refers to the lot number of the reagent bottle used for the analytical item to be managed and obtains the expiration date of the calibration data from the storage unit 35 (Step S108). The management unit 32 then determines whether the remaining time before the expiration date of the obtained blank data is within a predetermined duration Tb (Step S110). The duration Tb corresponds to a second predetermined period of time. The duration Tb is determined by the time required for the whole blank analysis process or, in more detail, the time required for preparing the blank sample, performing the blank analysis process, the operator checking accuracy of the calibration curve, and correcting the calibration curve. When the remaining time before the expiration date of the obtained blank is within the predetermined duration Tb, the blank analysis process needs to be performed because there is not much remaining time before the expiration date of the blank data. Unless the blank analysis process is performed, the expiration data of the blank data may be expired. When the remaining time before the expiration date of the obtained blank data is longer than the predetermined duration Tb, it is not necessary to perform the blank analysis process because there is much remaining time before the expiration date of the blank data. The duration Tb may be the same as the duration Ta in the calibration data check process so that the determining process can be easily performed.

When the management unit 32 determines that the expiration date of the obtained blank data is longer than the predetermined duration Tb (Step S110: No) and therefore it is not necessary to perform the blank analysis process, the management unit 32 continues to use the blank data obtained in the blank data search process and ends the blank data check process.

In contrast, when the management unit 32 determines that the remaining time before the expiration date of the obtained blank data is within the predetermined duration Tb (Step S110: Yes), the management unit 32 needs to perform the blank analysis process so as to prevent the expiration date of the blank data from expiring. Because the management method of the blank analysis process is set as lot unit, the management unit 32 accepts the blank analysis process for this lot number (Step S112).

Also, when the management unit 32 refers to the management method and determines that the initiation timing of the blank analysis process is set on each bottle for the analytical item to be managed (Step S106: Bottle), the management unit 32 refers to the bottle number of the reagent bottle used for the analytical item to be managed and obtains the expiration date of the blank data from the storage unit 35 (Step S114). Then, the management unit 32 determines whether the remaining time before the expiration date of the blank data is within the predetermined duration Tb (Step S116).

When the management unit 32 determines that the remaining time before the expiration date of the obtained blank data is longer than the predetermined duration Tb (Step S116: No) and therefore it is not necessary to perform the blank analysis process, the management unit 32 continues to use the blank data obtained in the blank data search process and ends the blank data check process.

In contrast, when the management unit 32 determines that the expiration date of the obtained blank data is within predetermined duration Tb (Step S116: Yes), the blank analysis process needs to be performed so as to prevent the expiration date of the blank data from expiring. Because the management method of the blank analysis process is set as bottle unit, the blank analysis process is accepted for this bottle number (Step S118).

After the acceptance of the blank analysis process at Step S112 or Step S118, the management unit 32 refers to the management method and determines again whether the calibration analysis process needs to be performed, i.e., whether the calibration data is needed, for the analytical item to be managed (Step S120).

For example, when only the blank analysis process has been accepted and therefore the blank analysis process is to be performed but the remaining time before the expiration date of the calibration data is within the duration Ta during the blank analysis process, it is preferable that the calibration analysis process be performed along with the blank analysis process so as to prevent the expiration date of the calibration data from expiring. Further, for example, when the validity duration of the calibration data is longer than the validity duration of the blank data, the expiration date of the calibration data is different from the expiration date of the blank data even if the previous calibration analysis process and the previous blank analysis process have been performed together. The difference between the validity duration of the calibration data and the validity duration of the blank data causes the difference between the expiration date of the calibration data and the expiration date of the blank data. Then, the calibration analysis process and the blank analysis process are always performed independently, whereby much burden is caused on the operator for operating the calibration analysis process and the blank analysis process. When the difference between the expiration date of the calibration data and the expiration date of the blank analysis process is small, it is preferable that the calibration analysis process and the blank analysis process be performed together, not performed independently.

The management unit 32 checks the expiration date of the calibration data again after the blank analysis process acceptance so as to prevent the expiration date of the calibration data from expiring during the blank analysis process, whereby preventing processing burden on the operator from increasing.

Specifically, when the management unit 32 determines that the calibration data is not needed for the analytical item to be managed (Step S120: No) and therefore it is not necessary to obtain the calibration data, the management unit 32 ends the blank data check process.

In contrast, when the management unit 32 determines that the calibration data is needed for the analytical item to be managed (Step S120: Yes), the management unit 32 determines whether the calibration analysis process has been accepted for the analytical item in the calibration data search process or the calibration data check process (Step S122).

When the management unit 32 determines that the calibration analysis process has been accepted (Step S122: Yes), the management unit 32 ends the blank data check process because the calibration analysis process and the blank analysis process can be performed at the same time.

On the other hand, when the management unit 32 determines that the calibration analysis process has not been accepted (Step S122: No), the management unit 32 refers to the calibration data obtained in he calibration data search process (Step S123). The management unit 32 then refers to the management method and determines whether the initiation timing of the calibration analysis process is set on each lot or each bottle for the analytical item to be managed (Step S124).

When the management unit 32 refers to the management method and determines that the initiation timing of the calibration analysis process is set on each lot for the analytical item to be managed (Step S124: Lot), the management unit 32 obtains the expiration date of the calibration data from the storage unit 35 (Step S126) based on the lot number of the reagent bottle used for the analytical item to be managed. Then, the management unit 32 determines whether the remaining time before the expiration date of the obtained calibration data is within a predetermined duration Tc (Step S128). The duration Tc corresponds to a third predetermined period of time. The duration Tc is determined based on, for example, the total time required for the calibration analysis process and the blank analysis process so as to prevent the expiration date of the calibration data from expiring during the blank analysis process and not to cause further burden on the operator. When the calibration analysis process and the blank analysis process are independently performed under the condition that the remaining time before the expiration date of the obtained calibration data is within the predetermined duration Tc, the expiration date of the calibration data may be expired during the blank analysis process and therefore further burden may be caused on the operator. Therefore, in such a case, it is preferable that the calibration analysis process and the blank analysis process be performed together. In contrast, when the calibration analysis process and the blank analysis process are independently performed by the operator under the condition that the remaining time before the expiration date of the obtained calibration data is longer than the predetermined duration Tc, the expiration date of the calibration data does not expire during the blank analysis process and therefore further burden is not caused on the operator. Therefore, the calibration analysis process and the blank analysis process can be performed independently.

Thus, when the management unit 32 determines that the expiration date of the obtained calibration data is longer than the predetermined duration Tc (Step S128: No) and therefore it is not necessary to perform the calibration analysis process and the blank analysis process together, the management unit 32 continues to use the calibration data obtained in the calibration data search process and ends the blank data check process.

In contrast, when the management unit 32 determines that the remaining time before the expiration date of the obtained calibration data is within the predetermined duration Tc (step S128: Yes), it is preferable that the calibration analysis process and the blank analysis process be performed together so that the operator bears less burden. Because the management method of the calibration analysis process is set as lot unit, the management unit 32 accepts the calibration analysis process for this lot number (Step S130).

When the management unit 32 refers to the management method and determines that the initiation timing of the calibration analysis process is set on each bottle for the analytical item to be managed (Step S124: Bottle), the management unit 32 obtains the expiration date of the calibration data from the storage unit 35 based on the bottle number of the reagent bottle used for the analytical item to be managed (Step S132). Then, the management unit 32 determines whether the remaining time before the expiration date of the obtained calibration data is within the predetermined duration Tc (Step S134). When the expiration date of the obtained calibration data is longer than the predetermined duration Tc (Step S134: No) and therefore it is not necessary to perform the calibration analysis process and the blank analysis process together, the management unit 32 continues to use the calibration data obtained in the calibration data search process and ends the blank data check process.

In contrast, when the management unit 32 determines that the expiration date of the obtained calibration data is within the predetermined duration Tc (Step S134: Yes), it is preferable that the calibration analysis process and the blank analysis process be performed together so that the operator bears less burden. Because the management method of the calibration analysis process is set as bottle unit, the management unit 32 accepts the calibration analysis process for this bottle number (Step S136).

In the blank data check process, the management unit 32 checks the expiration date of the blank data obtained in the blank data search process. Then, the management unit 32 accepts the blank analysis process according to the management method so as to prevent the expiration date of the blank data from expiring. Further, in the blank data check process, when heavy burden is to be caused on the operator, the management unit 32 accepts the calibration analysis process according to the management method so that the calibration analysis process can be performed along with the blank analysis process.

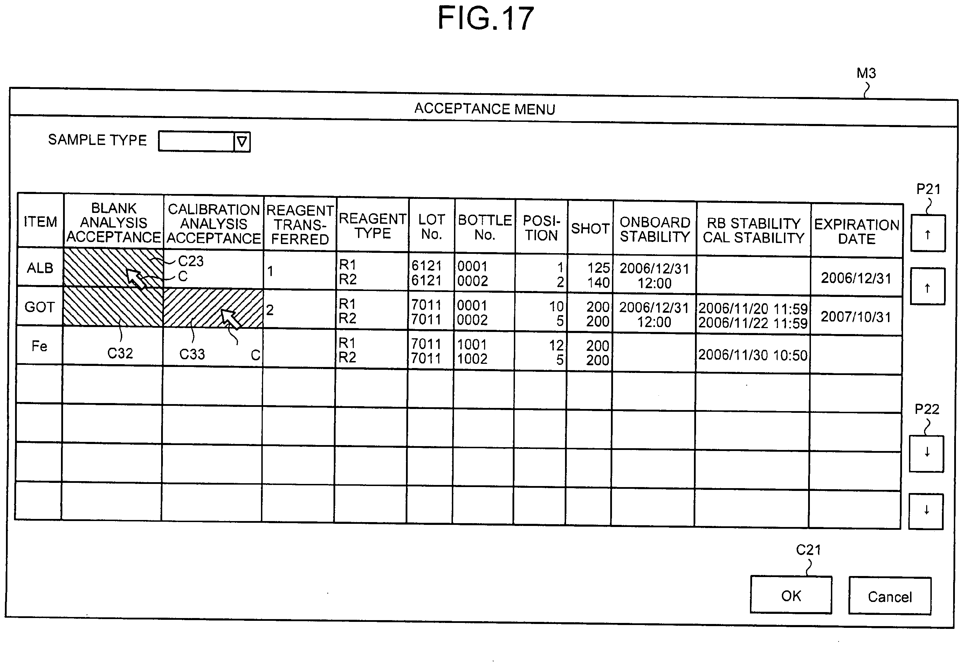

When accepting the calibration analysis process and the blank analysis process by the management unit 32, the acceptance menu is displayed on the screen of the display unit 37. For example, as shown in FIG. 17, an acceptance menu M3 that accepts the calibration analysis process and the blank analysis process is displayed on the screen of the display unit 37. In the acceptance menu M3, for example, acceptance fields corresponding to the calibration analysis process and the blank analysis process have a different color from other acceptance fields. For example, when the blank analysis process needs to be performed for the analytical item ALB according to the management process of the management unit 32, other fields are white but an acceptance field C23 of the blank analysis process for the analytical item ALB is blue. In this way, the operator can easily tell which analytical item needs the blank analysis process or the calibration analysis process to be performed. When the operator moves the cursor C onto the acceptance field C23, clicks the same, and clicks a selection field C21, instruction information to perform the blank analysis process for the analytical item ALB is input from the input unit 33 to the control unit 31. When the calibration analysis process needs to be performed along with the blank analysis process for the analytical item GOT according to the management process of the management unit 32 and the operator moves the cursor C onto an acceptance field C32 of the calibration analysis process for the analytical item GOT, an acceptance field C33 of the blank analysis process for the analytical item GOT may be automatically selected along with the selection of the acceptance field C32. Thus, the operator is less likely to make a mistake and bears less burden in selection processes.

In the analyzer 1 in accordance with the embodiment, the initiation timings of the calibration analysis process and the blank analysis process are independently managed for each analytical item. The calibration analysis process is performed only when it is necessary so that the cost on the calibration analysis process can be reduced. Further, in the analyzer 1, the calibration analysis process and the blank analysis process are accepted based on the check of the expiration date of the calibration data and the expiration date of the blank data in order to prevent the expiration date of each data from expiring. In this way, the analyzer can maintain its analysis accuracy properly.

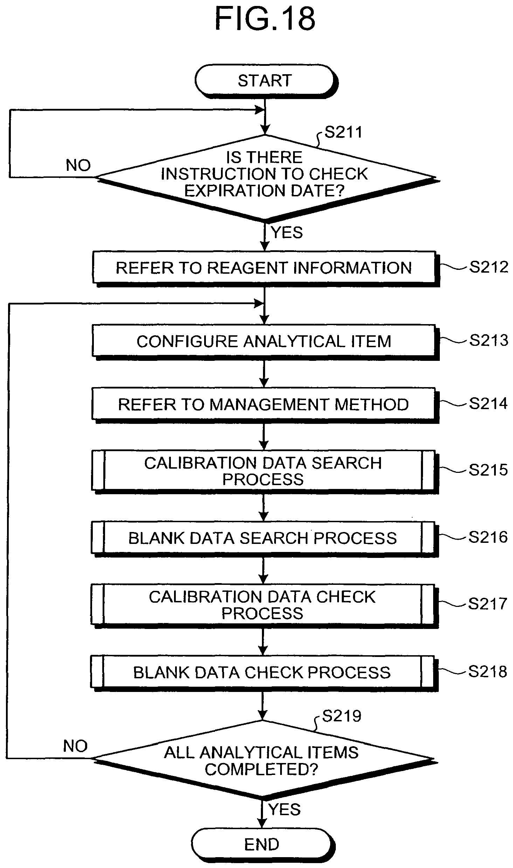

In FIG. 12, the management unit 32 performs the management process for the calibration analysis process and the blank analysis process, taking as an example a case where the reagent is supplied. Not limited to the case where the reagent is supplied, the management unit 32 can perform the management process for the calibration analysis process and the blank analysis process. For example, when the operator uses the input unit 33 and inputs instruction information to check the expiration date, the management unit 32 can perform the management process for the calibration analysis process and the blank analysis process. As shown in FIG. 18, the management unit 32 determines whether the instruction information to check the expiration dates of the calibration data and the blank data is input from the input unit 33 (Step S211). When the management unit 32 determines that the instruction information to check the expiration dates of the calibration data and the blank data is input from the input unit 33 for a predetermined analytical item (Step S211: Yes), the management unit 32 refers to the reagent information for the analytical item to be managed from all regent information stored in the storage unit 35 (Step S212). Similarly to Step S13 to Step S19 in FIG. 12, the management unit 32 performs an analytical item configuration process (Step S213) for configuring the analytical item that is selected as a target to be managed, a management method referring process (Step S214), the calibration data search process (Step S215), the blank data search process (Step S216), the calibration data check process (Step S217), the blank data check process (Step S218), and a determination process (Step S219) for determining whether the management process for all analytical items to be managed are completed.

In the embodiment, as shown in FIG. 7, the management unit 32 stores the calculated expiration date of the calibration data and the calculated expiration date of the blank data in the storage unit 35. Further, in the calibration data check process in FIG. 15 and the blank data check process in FIG. 16, the management unit 32 obtains the expiration date of the calibration data and the expiration date of the blank data from the storage unit 35. Not limited to this, in the analyzer 1, the calibration analysis process date and the validity duration of the calibration data may be stored in an external storage device. In this case, the management unit 32 does not perform the process of obtaining the expiration date of the calibration data at Step S80, Step S86 in FIG. 15, and Step S126, Step S132 in FIG. 16 but calculates the validity duration of the calibration data by performing processes similar to Step S4 in FIG. 7 after obtaining the calibration analysis process date and the validity duration of the calibration data that are stored in the external storage device. Further, in the analyzer 1, the blank analysis process date and the validity duration of the blank data may be stored in the external storage device. In this case, the management unit 32 does not perform the process of obtaining the expiration date of the blank data at Step S108 and Step S114 in FIG. 16 but calculates the expiration date of the blank data after obtaining the blank analysis process date and the validity duration of the blank data that are stored in the external storage device similarly to the process at Step S8 in FIG. 7.

The analyzer 1 in the embodiment can be embodied by executing programs that are previously prepared on a computer system. Such a computer system reads out and executes programs that are stored in a predetermined storage medium in order to perform the operations of the analyzer. The predetermined storage medium is any kind of storage medium that can store therein programs read by the computer system. The storage medium can be a "portable physical medium" such as a flexible disk (FD), a CD-ROM, an MO disk, a DVD disk, a magnet-optical disk, and an IC card, or "communication medium" such as a hard disk drive (HDD) included inside or outside the computer system, which temporarily stores programs in transmitting programs. The computer system performs the operations of the analyzer by connecting with a management server or other computer systems on a network, obtaining programs therefrom, and executing the same.

### INDUSTRIAL APPLICABILITY

As described, the present invention is suitable for analyzers that performs a calibration analysis process, in which a calibrator is analyzed, and a blank analysis process, in which a blank sample is used, for each analytical item in order to maintain its analysis accuracy. In particular, the analyzer of the present invention is suitable for managing analysis accuracy of the analyzer and reducing the cost spent on the calibration analysis process.

## Claims

1. An analyzer (1) for maintaining analysis accuracy by managing initiation timings of a calibration analysis process, in which a calibrator is analyzed, and a blank analysis process, in which a blank sample is used, independently for each analytical item, the analyzer (1) comprising:
a display unit (37), and
a control unit (31) including a management unit (32), wherein
the management unit (32) is configured to manage, for each analytical item, initiation timings of the calibration analysis process and the blank analysis process independently,
the management unit (32) is configured to accept at least the blank analysis process before an expiration date of a result of a last performed blank analysis process and when a reagent bottle is supplied based on lot information or bottle information of the supplied reagent bottle,
the management unit (32) is configured to accept the calibration analysis process before an expiration date of a result of a last performed calibration analysis process and when a reagent bottle is supplied based on lot information or bottle information of the supplied reagent bottle, and
the management unit (32) is configured to accept the calibration analysis process along with the blank analysis process when the management unit (32) determines that the remaining time before the expiration date of the result of the last performed blank analysis process is within a predetermined period of time Tb that is set based on a time period that is required for performing the blank analysis process and further the remaining time before the expiration date of the result of the last performed calibration analysis process is within a predetermined period of time Tc that is set based on a time period that is required for performing the calibration analysis process and a time period that is required for performing the blank analysis process, and accept the calibration analysis process and the blank analysis process independently otherwise, and wherein
the control unit (31) is configured to display on the display unit (37) in an acceptance menu for accepting by an operator the requests of the calibration analysis process and the blank analysis process accepted by the management unit (32) and which thus need to be performed according to the management unit (32).

2. The analyzer (1) according to claim 1, wherein the management unit (32) is configured, when the reagent bottle is supplied, to accept the calibration analysis process if lot information of the supplied reagent bottle is different from lot information of a reagent bottle used for the last performed calibration analysis process and use a result of the last performed calibration analysis process otherwise.

3. The analyzer (1) according to claim 1 or 2, wherein the management unit (32) is configured, when the reagent bottle is supplied, to accept the blank analysis process if lot information of the supplied reagent bottle is different from lot information of a reagent bottle used for the last performed blank analysis process, and use a result of the last performed blank analysis process otherwise.

4. The analyzer (1) according to claim 1, further comprising:
an input unit (33) that is configured to receive user input which sets, for each analytical item, the initiation timings of the calibration analysis process when the reagent bottle is supplied as each bottle or each lot and the blank analysis process when the reagent bottle is supplied as each bottle or each lot; and
a storage unit (35) that is configured to store the set initiation timings of the calibration analysis process and the blank analysis process, wherein
the management unit (32) is configured to accept the calibration analysis process and the blank analysis process with reference to the initiation timings stored in the storage unit (35).

5. The analyzer (1) according to any one of claims 1 to 4, wherein the management unit (32) is configured to obtain, for each analytical item, the expiration date of the result of the last performed calibration analysis process, based on a date when the last calibration analysis process was performed and a validity duration of the result of the last performed calibration analysis process, and the expiration date of the result of the last performed blank analysis process, based on a date when the last blank analysis process was performed and a validity duration of the result of the last performed blank analysis process.

6. The analyzer (1) according to claim 5, wherein the control unit (31) is further configured to display on the display unit (37) the expiration date of the result of the last performed calibration analysis process and the expiration date of the result of the last performed blank analysis process, which are obtained by the management unit (32) for each analytical item.

7. The analyzer (1) according to claim 1, wherein the management unit (32) is configured to accept a calibration analysis process when the management unit (32) determines that the remaining time before the expiration date of the result of the last performed calibration analysis process is within a first predetermined period of time Ta.

8. The analyzer (1) according to claim 7, wherein the first predetermined period of time Ta is set based on a time period that is required for performing a calibration analysis process.

## Patentansprüche

1. Analysegerät (1) zum Aufrechterhalten der Analysegenauigkeit durch Verwalten der Auslösezeitpunkte eines Kalibrieranalyseprozesses, in dem ein Kalibrator analysiert wird, und eines Leeranalyseprozesses, in dem eine Leerprobe verwendet wird, unabhängig für jedes Analyseelement, wobei das Analysegerät (1) umfasst:
einer Anzeigeeinheit (37) und
eine Steuereinheit (31) mit einer Verwaltungseinheit (32), wobei
die Verwaltungseinheit (32) so konfiguriert ist, dass sie für jedes Analyseelement Auslösezeitpunkt des Kalibrieranalyseprozesses und des Leeranalyseprozesses unabhängig voneinander verwaltet,
die Verwaltungseinheit (32) so konfiguriert ist, dass sie zumindest den Leeranalyseprozesses vor einem Verfallsdatum eines Ergebnisses eines zuletzt durchgeführten Leeranalyseprozesses und wenn eine Reagenzflasche auf der Grundlage von Chargeninformation oder Flascheninformation der gelieferten Reagenzflasche bereitgestellt wird, akzeptiert,
die Verwaltungseinheit (32) so konfiguriert ist, dass sie den Kalibrieranalyseprozess vor einem Verfallsdatum eines Ergebnisses eines zuletzt durchgeführten Kalibrieranalyseprozesses und wenn eine Reagenzflasche geliefert wird, auf der Grundlage von Chargeninformation oder Flascheninformation der gelieferten Reagenzflasche akzeptiert, und
die Verwaltungseinheit (32) so konfiguriert ist, dass sie den Kalibrieranalyseprozess zusammen mit dem Leeranalyseprozess akzeptiert, wenn die Verwaltungseinheit (32) feststellt, dass die verbleibende Zeit vor dem Verfallsdatum des Ergebnisses des zuletzt durchgeführten Leeranalyseprozesses innerhalb einer vorbestimmten Zeitspanne Tb liegt, die auf der Grundlage einer Zeitspanne eingestellt ist, die für die Durchführung des Leeranalyseprozesses erforderlich ist und ferner die verbleibende Zeit bis zum Verfallsdatum des Ergebnisses des zuletzt durchgeführten Kalibrieranalyseprozesses innerhalb einer vorgegebenen Zeitspanne Tc liegt, die auf der Grundlage einer Zeitspanne, die für die Durchführung des Kalibrieranalyseprozesses erforderlich ist, und einer Zeitspanne, die für die Durchführung des Leeranalyseprozesses erforderlich ist, festgelegt wird, und ansonsten den Kalibrieranalyseprozess und den Leeranalyseprozess unabhängig voneinander akzeptieren, und wobei
die Steuereinheit (31) so konfiguriert ist, dass sie an der Anzeigeeinheit (37) in einem Annahmemenü zum Annehmen durch einen Bediener die von der Verwaltungseinheit (32) akzeptierten Anforderungen des Kalibrieranalyseprozesses und des Leeranalyseprozesses, die somit gemäß der Verwaltungseinheit (32) durchgeführt werden müssen, anzeigt.

2. Analysegerät (1) nach Anspruch 1, wobei die Verwaltungseinheit (32) so konfiguriert ist, dass sie bei Zuführung der Reagenzflasche den Kalibrieranalyseprozess akzeptiert, wenn die Chargeninformation der zugeführten Reagenzflasche von der Chargeninformation einer Reagenzflasche, die für den zuletzt durchgeführten Kalibrieranalyseprozess verwendet wurde, abweicht, und ansonsten ein Ergebnis des zuletzt durchgeführten Kalibrieranalyseprozesses verwendet.

3. Analysegerät (1) nach Anspruch 1 oder 2, wobei die Verwaltungseinheit (32) so konfiguriert ist, dass sie bei Zuführung der Reagenzflasche den Leeranalyseprozess akzeptiert, wenn die Chargeninformation der zugeführten Reagenzflasche von der Chargeninformation einer Reagenzflasche abweicht, die für den zuletzt durchgeführten Leeranalyseprozess verwendet wurde, und ansonsten ein Ergebnis des zuletzt durchgeführten Leeranalyseprozesses verwendet.

4. Analysegerät (1) nach Anspruch 1, bestehend aus
einer Eingabeeinheit (33), die so konfiguriert ist, dass sie Benutzereingaben empfängt, die für jedes Analyseelement die Auslösezeitpunkte des Kalibrieranalyseprozesses, wenn die Reagenzflasche als jede Flasche oder jede Charge zugeführt wird, und des Leeranalyseprozesses, wenn die Reagenzflasche als jede Flasche oder jede Charge zugeführt wird, festlegt; und
eine Speichereinheit (35), die so konfiguriert ist, dass sie die eingestellten Auslösezeitpunkte des Kalibrieranalyseprozesses und des Leeranalyseprozesses speichert, wobei
die Verwaltungseinheit (32) so konfiguriert ist, dass sie den Kalibrieranalyseprozess und den Leeranalyseprozess unter Bezugnahme auf die in der Speichereinheit (35) gespeicherten Auslösezeitpunkte akzeptiert.

5. Analysegerät (1) nach einem der Ansprüche 1 bis 4, wobei die Verwaltungseinheit (32) so konfiguriert ist, dass sie für jedes Analyseelement das Verfallsdatum des Ergebnisses des zuletzt durchgeführten Kalibrierungsanalyseprozesses auf der Grundlage eines Datums, an dem der letzte Kalibrierungsanalyseprozess durchgeführt wurde, und einer Gültigkeitsdauer des Ergebnisses des zuletzt durchgeführten Kalibrierungsanalyseprozesses sowie das Verfallsdatum des Ergebnisses des zuletzt durchgeführten Leeranalyseprozesses auf der Grundlage eines Datums, an dem der letzte Leeranalyseprozess durchgeführt wurde, und einer Gültigkeitsdauer des Ergebnisses des zuletzt durchgeführten Leeranalyseprozesses erhält.

6. Analysegerät (1) nach Anspruch 5, wobei die Steuereinheit (31) ferner so konfiguriert ist, dass sie auf der Anzeigeeinheit (37) das Verfallsdatum des Ergebnisses des zuletzt durchgeführten Kalibrieranalyseprozesses und das Verfallsdatum des Ergebnisses des zuletzt durchgeführten Leeranalyseprozesses anzeigt, die von der Verwaltungseinheit (32) für jedes Analyseelement erhalten werden.

7. Analysegerät (1) nach Anspruch 1, wobei die Verwaltungseinheit (32) so konfiguriert ist, dass sie einen Kalibrierungsanalyseprozess akzeptiert, wenn die Verwaltungseinheit (32) feststellt, dass die verbleibende Zeit vor dem Verfallsdatum des Ergebnisses des zuletzt durchgeführten Kalibrierungsanalyseprozesses innerhalb einer ersten vorbestimmten Zeitspanne Ta liegt.

8. Analysegerät (1) nach Anspruch 7, wobei die erste vorbestimmte Zeitspanne Ta auf der Grundlage einer Zeitspanne eingestellt wird, die für die Durchführung eines Kalibrierungsanalyseprozesses erforderlich ist.

## Revendications

1. Analyseur (1) pour maintenir une précision d'analyse par gestion d'instants d'initiation d'un processus d'analyse d'étalonnage, dans lequel un étalonneur est analysé, et d'un processus d'analyse à blanc, dans lequel un échantillon témoin est utilisé, indépendamment pour chaque item analytique, l'analyseur (1) comprenant :
une unité (37) d'affichage, et
une unité (31) de commande incluant une unité (32) de gestion, dans lequel
l'unité (32) de gestion est configurée pour gérer, pour chaque item analytique, des instants d'initiation du processus d'analyse d'étalonnage et du processus d'analyse à blanc indépendamment,
l'unité (32) de gestion est configurée pour accepter au moins le processus d'analyse à blanc avant une date d'expiration d'un résultat d'un processus d'analyse à blanc effectué en dernier et lorsqu'une bouteille de réactif est fournie sur la base d'une information de lot ou d'une information de bouteille de la bouteille de réactif fournie,
l'unité (32) de gestion est configurée pour accepter le processus d'analyse d'étalonnage avant une date d'expiration d'un résultat d'un processus d'analyse d'étalonnage effectué en dernier et lorsqu'une bouteille de réactif est fournie sur la base d'une information de lot ou d'une information de bouteille de la bouteille de réactif fournie, et
l'unité (32) de gestion est configurée pour accepter le processus d'analyse d'étalonnage ainsi que le processus d'analyse à blanc lorsque l'unité (32) de gestion détermine que le temps restant avant la date d'expiration du résultat du processus d'analyse à blanc effectué en dernier est à l'intérieur d'une période de temps Tb prédéterminée qui est fixée sur la base d'une période de temps qui est requise pour effectuer le processus d'analyse à blanc et en outre que le temps restant avant la date d'expiration du résultat du processus d'analyse d'étalonnage effectué en dernier est à l'intérieur d'une période de temps Tc prédéterminée qui est fixée sur la base d'une période de temps qui est requise pour effectuer le processus d'analyse d'étalonnage et d'une période de temps qui est requise pour effectuer le processus d'analyse à blanc, et accepter le processus d'analyse d'étalonnage et le processus d'analyse à blanc indépendamment dans le cas contraire, et dans lequel
l'unité (31) de commande est configurée pour afficher sur l'unité (37) d'affichage dans un menu d'acceptation pour accepter par un opérateur les requêtes du processus d'analyse d'étalonnage et du processus d'analyse à blanc acceptés par l'unité (32) de gestion et qui ainsi nécessitent d'être effectués selon l'unité (32) de gestion.

2. Analyseur (1) selon la revendication 1, dans lequel l'unité (32) de gestion est configurée, lorsque la bouteille de réactif est fournie, pour accepter le processus d'analyse d'étalonnage si une information de lot de la bouteille de réactif fournie est différente d'une information de lot d'une bouteille de réactif utilisée pour le processus d'analyse d'étalonnage effectué en dernier et utiliser un résultat du processus d'analyse d'étalonnage effectué en dernier dans le cas contraire.

3. Analyseur (1) selon la revendication 1 ou 2, dans lequel l'unité (32) de gestion est configurée, lorsque la bouteille de réactif est fournie, pour accepter le processus d'analyse à blanc si une information de lot de la bouteille de réactif fournie est différente d'une information de lot d'une bouteille de réactif utilisée pour le processus d'analyse à blanc effectué en dernier et utiliser un résultat du processus d'analyse à blanc effectué en dernier dans le cas contraire.

4. Analyseur (1) selon la revendication 1, comprenant en outre :
une unité (33) d'entrée qui est configurée pour recevoir une entrée d'utilisateur qui fixe, pour chaque item analytique, les instants d'initiation du processus d'analyse d'étalonnage lorsque la bouteille de réactif est fournie comme chaque bouteille ou chaque lot et du processus d'analyse à blanc lorsque la bouteille de réactif est fournie comme chaque bouteille ou chaque lot ; et
une unité (35) de stockage qui est configurée pour stocker les instants d'initiation fixés du processus d'analyse d'étalonnage et du processus d'analyse à blanc, dans lequel
l'unité (32) de gestion est configurée pour accepter le processus d'analyse d'étalonnage et le processus d'analyse à blanc en référence aux instants d'initiation stockés dans l'unité (35) de stockage.

5. Analyseur (1) selon l'une quelconque des revendications 1 à 4, dans lequel l'unité (32) de gestion est configurée pour obtenir, pour chaque item analytique, la date d'expiration du résultat du processus d'analyse d'étalonnage effectué en dernier, sur la base d'une date à laquelle le dernier processus d'analyse d'étalonnage a été effectué et d'une durée de validité du résultat du processus d'analyse d'étalonnage effectué en dernier, et la date d'expiration du résultat du processus d'analyse à blanc effectué en dernier, sur la base d'une date à laquelle le dernier processus d'analyse à blanc a été effectué et d'une durée de validité du résultat du processus d'analyse à blanc effectué en dernier.

6. Analyseur (1) selon la revendication 5, dans lequel l'unité (31) de commande est en outre configurée pour afficher sur l'unité (37) d'affichage la date d'expiration du résultat du processus d'analyse d'étalonnage effectué en dernier et la date d'expiration du résultat du processus d'analyse à blanc effectué en dernier, qui sont obtenues par l'unité (32) de gestion pour chaque item analytique.

7. Analyseur (1) selon la revendication 1, dans lequel l'unité (32) de gestion est configurée pour accepter un processus d'analyse d'étalonnage lorsque l'unité (32) de gestion détermine que le temps restant avant la date d'expiration du résultat du processus d'analyse d'étalonnage effectué en dernier est à l'intérieur d'une première période de temps Ta prédéterminée.

8. Analyseur (1) selon la revendication 7, dans lequel la première période de temps Ta prédéterminée est fixée sur la base d'une période de temps qui est requise pour effectuer un processus d'analyse d'étalonnage.
